# FASCICULE DE BREVET EUROPEEN

(11) **EP 0 754 624 B1**
(45) Date de publication et mention de la délivrance du brevet: **31.10.2001**
(21) Numéro de dépôt: 96401603.4
(22) Date de dépôt: 18.07.1996
(51) Int. Cl.: B64D 45/02

(54) **Installation de mise en continuité électrique pour rotor de giravion**
Vorrichtung zur Sicherstellung des elektrischen Durchganges für einen Hubschrauberrotor
Device for assuring the electrical continuity for a helicopter rotor

(30) Priorité: 21.07.1995 FR 9508887
(43) Date de publication de la demande: 22.01.1997
(73) Titulaire: EUROCOPTER, 13725 Marignane Cédex (FR)
(72) Inventeur: Mondet, Jean Joseph Henri, 13330 Pelissanne (FR); Louis, Charles Marcel Denis, 13086 Aix en Provence (FR)
(74) Mandataire: Bérogin, Francis

(56) Documents cités:
- US-A- 4 574 325

## Description

L'invention concerne un rotor de giravion avec une installation de mise en continuité électrique, pour l'évacuation des charges électrostatiques et le passage du courant de foudre sur le rotor, tel qu'un rotor principal ou arrière d'hélicoptère, et du type comprenant :
- un moyeu, solidaire en rotation d'un mât rotor autour d'un axe de rotation, et tel que l'ensemble mât-moyeu comporte au moins une partie métallique en continuité électrique avec la structure du giravion, et
- au moins deux pales, dont chacune est reliée au moyeu par l'intermédiaire d'un organe de liaison sensiblement radial par rapport à l'axe de rotation, et lui-même relié au moyeu par des moyens de retenue et d'articulation.

Sur les rotors de giravions, et en particulier d'hélicoptères, il est connu de réaliser des liaisons notamment entre les pales d'un rotor et son moyeu, pour assurer une continuité électrique entre ces pièces, afin de garantir leur protection contre des agressions dues à des courants de foudre ou à des accumulations de charges électrostatiques, dans le but d'améliorer la sécurité des vols de ces aéronefs, en particulier dans des conditions orageuses.

Pour évacuer les charges électrostatiques qui s'accumulent sur une pale de rotor, ainsi que pour le passage des courants de foudre dans la pale, depuis une zone d'impact sur celle-ci et jusqu'à un point de sortie sur la pale, il est connu que chaque pale comprenne au moins un conducteur électrique, et de préférence un faisceau de tels conducteurs électriques allongés, dits de "métallisation", noyé(s) dans la pale, pour le passage des charges électrostatiques et du courant de foudre, et ce ou ces conducteurs est ou sont reliés à ladite partie métallique de l'ensemble mât-moyeu, en continuité électrique avec la structure du giravion, par des moyens de mise en continuité électrique de l'installation.

Ces moyens de mise en continuité électrique sont généralement constitués de conducteurs de métallisation, comprenant des tresses conductrices métalliques formant des boucles et assurant des passages aériens entre les éléments du rotor à relier, par exemple les pales et le moyeu, auxquels ces conducteurs de métallisation sont fixés par l'intermédiaire de cosses et de douilles réalisant les connexions électriques aux extrémités des tresses.

Des exemples de tels conducteurs de métallisation sont décrits dans FR-A-2 368 154 et FR-A-2 679 074.

Il s'avère que la tenue mécanique de tels conducteurs de métallisation, en particulier la tenue mécanique du sertissage d'une âme centrale conductrice entourée d'une tresse conductrice à l'intérieur des cosses, n'est pas satisfaisante, notamment sous l'effet des efforts de traction centrifuge qui s'exercent sur ces conducteurs de métallisation sur un rotor en rotation, ainsi que sous l'effet des mouvements alternés qu'ils subissent pour suivre les pièces sur lesquelles et/ou entre lesquelles ils sont fixés, en raison des débattements angulaires alternés en pas, battement et traînée, des pales avec leur organe de liaison, par rapport au moyeu du rotor. On observe en particulier des dessertissages, essentiellement par glissement du conducteur dans le logement des cosses, ce phénomène de dessertissage étant encore plus accentué lorsque les conducteurs de métallisation forment une boucle, comme cela est le cas entre le moyeu et un organe de liaison d'une pale au moyeu, et également, dans le cas d'un rotor à pales repliables par pivotement par rapport à leur organe de liaison au moyeu, entre cet organe de liaison et le pied de la pale correspondante, et que le conducteur de métallisation est traversé par un courant, ce qui est le cas lorsqu'une pale subit un foudroiement. En effet, dans ce cas, il y a apparition de forces répulsives d'origine magnétique issues des composantes antagonistes du vecteur de courant parcourant le conducteur, ces forces étant d'autant plus importantes que l'intensité de courant et le rayon de courbure du conducteur sont prononcés, de sorte qu'il existe un risque de rupture d'une tresse ou d'une cosse de conducteur.

Par ailleurs, les passages aériens et boucles des conducteurs de métallisation, nécessaires en raison des débattements des pales et de leurs organes de liaison par rapport au moyeu, en vol, ainsi qu'en raison des débattements des pales par rapport à leurs organes de liaison, au sol et en cas de repliage des pales, font peser des risques d'interférences mécaniques, et donc d'accrochages et d'arrachements, avec d'autres composants de la tête de rotor, ou voisins de celle-ci, dans les différentes configurations d'utilisation du rotor.

Le problème à la base de l'invention est donc, sur un rotor du type présenté ci-dessus, d'éviter les boucles et passages aériens des conducteurs de métallisation entre, essentiellement, le moyeu et les organes de liaison des pales au moyeu, et, de préférence également, entre ces organes et les pales du rotor.

D'une manière générale, le but de l'invention est de remédier aux inconvénients précités des installations de mise en continuité électrique de rotors de giravions, et de proposer un rotor avec une telle installation convenant mieux que celles connues aux divers desiderata de la pratique.

A cet effet, l'invention propose un rotor de giravion avec une installation du type présenté ci-dessus, et qui se caractérise en ce que les moyens de mise en continuité électrique comprennent, pour chaque pale, au moins un premier organe électriquement conducteur, solidaire de l'organe de liaison correspondant dans ses débattements en pas, battement et traînée avec ladite pale, par rapport au moyeu, et de sorte à être en continuité électrique avec ledit conducteur électrique de la pale, et maintenu élastiquement en contact permanent avec une première borne électriquement conductrice, solidaire du moyeu, et en continuité électrique avec ladite partie métallique de l'ensemble mât-moyeu. On évite ainsi toute boucle conductrice en passage aérien entre le moyeu et l'organe de liaison de chaque pale au moyeu.

Dans un premier mode de réalisation, dans lequel le premier organe conducteur assure à la fois la métallisation (l'évacuation des charges électrostatiques) et le passage du courant de foudre, ce premier organe est monté sur un bras oscillant sur un premier support fixé à l'organe de liaison, le bras étant sollicité par des premiers moyens élastiques de rappel appliquant le premier organe conducteur en contact élastique contre ladite première borne.

Avantageusement dans ce cas, pour assurer la continuité électrique du premier organe conducteur jusqu'à l'organe de liaison, ledit premier organe conducteur est monté en contact conducteur sur le bras oscillant, qui est électriquement conducteur, et en contact conducteur avec ledit premier support, électriquement conducteur et en continuité électrique avec ledit conducteur de la pale, lesdits premiers moyens élastiques prenant appui sur ledit premier support.

Pour faciliter le montage et le démontage, et pour tenir compte de l'évolution non linéaire de la résultante des efforts antagonistes dûs à la force centrifuge et aux premiers moyens élastiques de rappel, ces derniers sont avantageusement montés entre le bras oscillant et le premier support, autour d'un axe fixé au bras, et déplaçable axialement par rapport au premier support, sur lequel l'axe est retenu, avec un jeu axial, par une butée limitant l'amplitude d'oscillation du bras.

En variante, pour éviter le montage d'un premier support particulier sur l'organe de liaison, le premier support est un élément déjà prévu, pour d'autres fonctions sur l'organe de liaison, en particulier une butée de traînée ou un support de butée de traînée de la pale correspondante, et rapporté sur l'organe de liaison, auquel cas les premiers moyens élastiques de rappel comprennent, selon une structure avantageusement simple, au moins une lame ressort fixée par une partie d'extrémité sur le bras oscillant et élastiquement en appui par une autre partie d'extrémité contre le premier support, constitué par ou supportant ladite butée de traînée, la lame ressort travaillant en flexion pour appliquer ce premier organe conducteur contre la première borne.

Selon une structure simple et fiable, ledit premier organe conducteur est une bille en acier cémenté, sertie dans une extrémité du bras oscillant monté pivotant, par son autre extrémité, autour d'un axe sensiblement perpendiculaire à la direction radiale de l'organe de liaison correspondant, et ladite première borne comprend une piste en calotte sphérique en saillie sensiblement radiale vers l'extérieur, et sensiblement centrée sur un centre d'articulation desdits moyens de retenue et d'articulation correspondants, pour recevoir l'appui élastique de ladite bille pendant les débattements angulaires en pas, battement et traînée de l'organe de liaison et de la pale par rapport au moyeu et autour dudit centre d'articulation.

Par contre, si l'on souhaite séparer le passage des charges électrostatiques du passage du courant de foudre, le premier organe conducteur est avantageusement élastiquement déformable et de longueur variable, tel qu'un ressort hélicoïdal, de préférence précontraint, par exemple en traction, afin de compenser les variations de la distance entre les attaches de ses extrémités, pour l'évacuation des charges électrostatiques, ce premier organe étant lié, d'une part, à un premier support électriquement conducteur monté sur ledit organe de liaison, et en continuité électrique avec ledit conducteur de la pale, et, d'autre part, à ladite première borne, les moyens de mise en continuité électrique comprenant de plus, pour chaque pale et pour le passage du courant de foudre, un éclateur en forme d'aiguille électriquement conductrice, fixée à proximité dudit premier organe conducteur sur ledit premier support conducteur et de sorte que sa pointe est dirigée vers un centre d'articulation desdits moyens de retenue et d'articulation, en étant espacée d'un faible jeu d'une piste en forme de calotte sphérique, en saillie sensiblement radiale vers l'extérieur et sensiblement centrée sur ledit centre d'articulation, de ladite seconde borne. Dans cette structure, on comprend que le montage de l'aiguille de l'éclateur sur le premier support, à proximité d'un ressort hélicoïdal, servant de premier organe conducteur, ou de plusieurs ressorts montés en parallèle, présente l'avantage que le ou les ressorts servent d'appel électrique pour l'éclateur.

Dans les différents exemples précités, la première borne peut avantageusement être fixée au moyeu par des moyens électriquement conducteurs de fixation desdits moyens de retenue et d'articulation correspondants à une partie métallique conductrice du moyeu en continuité électrique avec la structure du giravion.

En particulier, pour un rotor sur lequel la partie radiale interne de chaque organe de liaison est agencée en chape interne, et les moyens de retenue et d'articulation correspondants comprennent une butée lamifiée sphérique, avec une armature radiale interne fixée entre les branches de la chape interne et une armature radiale externe fixée par au moins un axe boulonné électriquement conducteur sur ladite partie métallique du moyeu, qui est engagée dans la chape interne, et dans laquelle se situe le centre d'articulation de ladite butée lamifiée sphérique, il est avantageux que la borne à piste en calotte sphérique soit fixée au moyeu par ledit axe boulonné, de sorte que la piste en calotte sphérique est disposée dans la chape interne avec sa convexité tournée sensiblement radialement vers l'extérieur, ledit premier organe conducteur, ledit premier support conducteur, et, le cas échéant, lesdits premiers moyens élastiques de rappel et ledit bras oscillant ou ladite aiguille d'éclateur étant également montés dans ladite chape interne. L'avantage d'une telle structure est que ce mécanisme est visible et facilement accessible latéralement dans la chape radiale interne de l'organe de liaison de chaque pale au moyeu, ce qui facilite les opérations de maintenance.

Au niveau du raccordement entre chaque pale et son organe de liaison au moyeu, lorsque cet organe de liaison n'est pas un pied de pale fourchu mais un organe distinct, généralement appelé manchon, dans la partie radiale externe duquel le pied de pale est retenu, en configuration de vol, et peut éventuellement pivoter, pour le repliage de la pale par rapport à cet organe, il est avantageux que les moyens de mise en continuité électrique de l'installation comprennent également, pour chaque pale, au moins un second organe électriquement conducteur, déformable et/ou mobile sur un second support solidaire de l'un des éléments que sont le pied de la pale correspondante et l'organe de liaison correspondant, le second organe conducteur étant, au moins lorsque la pale est en configuration de vol, maintenu par des seconds moyens de rappel élastique en contact permanent contre une seconde borne électriquement conductrice portée par l'autre desdits éléments, le second organe conducteur et la seconde borne conductrice étant en continuité électrique l'un avec ledit conducteur de la pale et l'autre avec ledit premier organe conducteur.

Avantageusement, selon un mécanisme allégé de contact permanent, sauf lorsque la pale est éventuellement repliée par rapport à son organe de liaison au moyeu, et qui assure le passage de l'électricité statique et sert d'éclateur en cas de foudre, le second organe conducteur peut être un poussoir monté coulissant dans le second support, qui est un corps électriquement conducteur et tubulaire, avec lequel le poussoir reste en contact permanent, et dont le poussoir fait saillie par une extrémité du poussoir appliquée contre la seconde borne conductrice sous l'action des seconds moyens élastiques de rappel, de préférence électriquement conducteurs, sollicitant son autre extrémité, agencée en butée empêchant la sortie du poussoir hors du corps, lesdits seconds moyens élastiques de rappel étant disposés dans un logement du corps conducteur et prenant appui contre un bouchon, de préférence électriquement conducteur, de fermeture dudit logement.

La seconde borne conductrice peut être une pièce rapportée, par exemple vissée ou collée, sur l'élément qui la porte, de sorte à être en contact électrique avec une partie conductrice de cet élément, mais il est également possible que cette seconde borne conductrice soit constituée par une partie d'un conducteur électrique de passage des charges électrostatiques et du courant de foudre, et qui apparaît en surface de l'élément qui la porte, en particulier lorsque cet élément est la pale, car alors le conducteur électrique dont une partie constitue la seconde borne conductrice est avantageusement un conducteur du faisceau de métallisation de cette pale.

En particulier, pour un rotor sur lequel la partie radiale externe de chaque organe de liaison est agencée en chape externe, dans laquelle le pied de la pale correspondante est retenu par deux broches sensiblement parallèles entre elles, et dont l'une est amovible pour permettre le repliage de la pale par rapport à l'organe de liaison par pivotement autour de l'autre broche, il est avantageux que ladite seconde borne conductrice soit sur l'extrémité radiale interne du pied de pale, et ledit second support soit en saillie, en regard de ladite seconde borne, dans ladite chape externe de l'organe de liaison, de sorte qu'en position repliée de la pale, ledit second organe conducteur n'est plus en contact avec la seconde borne.

De plus, si l'équilibrage de chaque ensemble paleorgane de liaison du rotor est assuré par un bol à grenaille, de manière en soi connu, il est alors avantageux que le second support soit fixé sur ou d'une seule pièce avec une partie radiale externe du bol à grenaille, lui-même électriquement conducteur et disposé sensiblement dans le fond de ladite chape radiale externe de l'organe de liaison, de sorte que le second organe conducteur fasse saillie sensiblement radialement vers l'extérieur du second support, contre la seconde borne sur le pied de la pale en configuration de vol. Pour faciliter la réalisation, le bol à grenaille peut être retenu en entretoise entre les deux branches opposées de la chape radiale externe de l'organe de liaison par au moins une broche tubulaire de remplissage et vidange du bol.

Entre le premier organe conducteur et celui du second organe conducteur et de la seconde borne conductrice qui est monté sur l'organe de liaison, la continuité électrique peut être assurée par l'organe de liaison, au moins partiellement électriquement conducteur à cette fin, ce qui est notamment le cas lorsque l'organe de liaison est un organe tout métallique. Mais, dans le cas d'un organe de liaison électriquement isolant, les moyens de mise en continuité électrique peuvent comprendre, pour chaque pale, au moins un câble conducteur de passage des décharges électrostatiques et du courant de foudre, qui peut comprendre une tresse conductrice et être avantageusement tel que décrit dans FR-A-2 679 074, et qui s'étend, sensiblement radialement par rapport à l'axe de rotation, dans ou le long de l'organe de liaison, d'une manière générale entre le second organe conducteur ou la seconde borne conductrice sur la pale et la partie métallique du moyeu en continuité électrique avec l'ensemble mât-moyeu, et qui, plus particulièrement, est électriquement raccordé, par son extrémité radiale interne, au premier organe conducteur ou au support de ce dernier, ou encore à la première borne conductrice ou tout organe conducteur la reliant au moyeu et, par son extrémité radiale externe, à celui du second organe conducteur et de la seconde borne conductrice qui est monté sur l'organe de liaison.

Il est également possible, lorsque l'organe de liaison est conformé en manchon dans sa partie centrale, que le conducteur à tresse de métallisation et de passage du courant de foudre s'étende dans ce manchon, qui le protège et limite ses déplacements, et soit directement raccordé par son extrémité radiale interne à la partie métallique du moyeu en continuité électrique avec la structure de l'aéronef, de préférence à l'aide des moyens de fixation qui fixent sur cette partie du moyeu les moyens de retenue et d'articulation correspondants.

Pour un rotor sur lequel, pour chaque organe de liaison, le pied de la pale correspondante est retenu dans une chape externe d'une ferrure de repliage montée sur l'organe de liaison par une liaison pivotante autour d'un axe de repliage de la pale avec la ferrure par rapport à l'organe de liaison, afin de permettre un repliage automatique des pales par des actionneurs montés dans les organes de liaison, la seconde borne conductrice est avantageusement sur l'extrémité radiale interne du pied de pale, et ledit second support est dans ladite chape externe de la ferrure de repliage et en regard de ladite seconde borne de sorte que le second organe conducteur est en saillie sensiblement radialement vers l'extérieur du second support et en contact conducteur élastique permanent avec la seconde borne pour assurer la continuité électrique entre la pale et la ferrure, la continuité électrique entre la ferrure et l'organe de liaison étant assurée par contact conducteur avec au moins un axe de pivotement conducteur. Dans ce cas, selon une réalisation avantageusement simple et économique, légère et peu encombrante, le second organe conducteur est un pion de contact à tête munie d'une portée sphérique de contact avec la seconde borne et repoussé par des moyens élastiques prenant appui sur le second support agencé en bague épaulée montée dans le fond de la chape de la ferrure et dans laquelle le pion coulisse sur une course limitée.

D'autres avantages et caractéristiques de l'invention ressortiront de la description donnée ci-dessous, à titre non limitatif, d'exemples de réalisation décrits en référence aux dessins annexés sur lesquels :
- les figures 1a et 1b représentent en coupe schématique par un plan sensiblement radial, passant par l'axe de rotation du rotor et par un axe longitudinal d'une pale du rotor, les parties respectivement radiale interne et radiale externe d'une tête de rotor à pales manuellement repliables par pivotement autour de l'une des deux broches de retenue du pied de pale dans un manchon de liaison au moyeu du rotor,
- la figure 2 est une vue en coupe à plus grande échelle d'une partie de la tête de rotor de la figure la, sur laquelle est montée une variante de l'installation de mise en continuité électrique de la figure 1a,
- la figure 3 est une vue partielle en perspective d'une seconde variante d'installation de mise en continuité électrique, sur les deux organes d'une tête de rotor analogue à celle des figures 1a et 1b, et avec lesquels elle coopère,
- la figure 4 est une vue en perspective des éléments de l'installation de mise en continuité électrique qui sont visibles sur la figure 3,
- la figure 5 est une vue en coupe transversale partielle de la figure 3, par un plan perpendiculaire à l'axe de rotation du rotor et passant sensiblement par l'axe longitudinal du manchon correspondant,
- la figure 6 est une vue analogue à la figure 1b pour une variante de la partie radiale externe de la tête de rotor à pales manuellement repliables,
- la figure 7 est également une vue analogue à la figure 1b, mais pour une tête de rotor dont chaque pale a son pied retenu dans une ferrure de repliage, avec laquelle la pale est repliée automatiquement, et qui constitue la partie radiale externe d'un manchon de liaison au moyeu du rotor, cette figure montrant la continuité électrique d'une part entre le pied de pale et la ferrure de repliage, et, d'autre part, entre la ferrure et le manchon, et
- la figure 8 représente un détail à plus grande échelle des moyens assurant la continuité électrique entre pale et ferrure de repliage dans la réalisation de la figure 7.

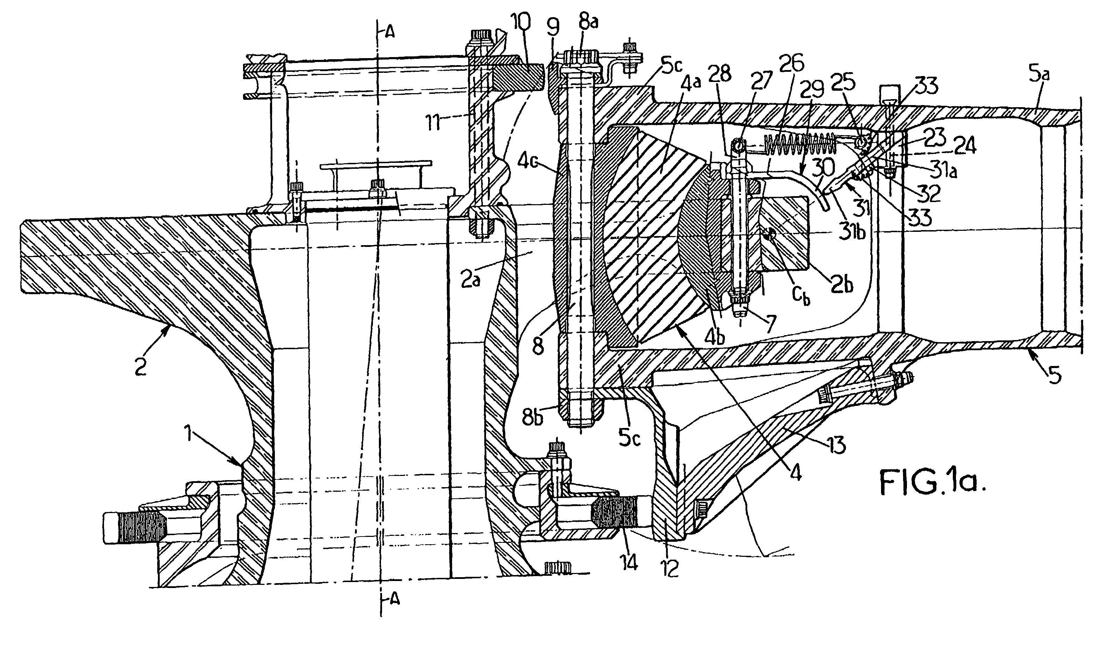

Les figures 1a et 1b représentent partiellement un rotor principal d'hélicoptère, dont le mât rotor 1 tubulaire a sa partie supérieure d'une seule pièce avec un moyeu 2, tournant avec lui autour de l'axe de rotation A-A du rotor. Le moyeu 2 est agencé en plateau radial (par rapport à l'axe A-A) et alvéolé, présentant, pour chacune des pales 3 du rotor, un alvéole 2a traversant axialement une partie radiale externe du plateau de moyeu 2, pour loger partiellement des moyens 4 de retenue et d'articulation sur le moyeu 2 d'un organe 5 de liaison de la pale correspondante 3 au moyeu 2.

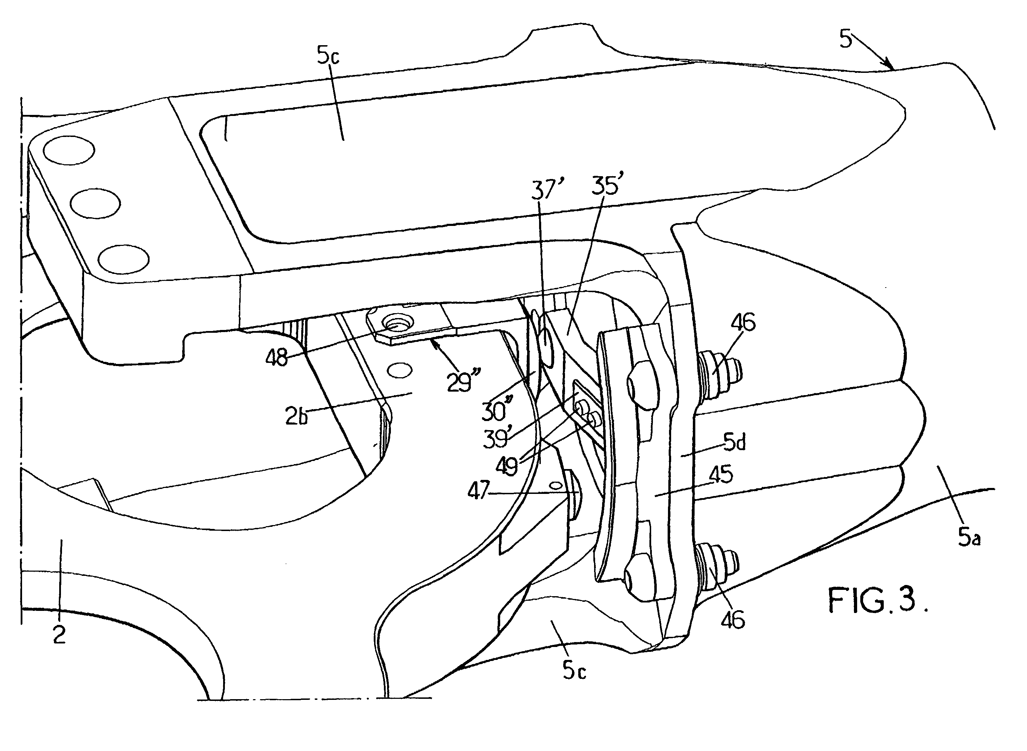

L'organe de liaison 5, appelé manchon dans la suite de la description, car sa partie centrale 5a est tubulaire (comme visible sur la variante de la figure 3) est un organe disposé sensiblement radialement par rapport à l'axe A-A, et qui, dans cet exemple, est métallique et électriquement conducteur. Les parties d'extrémité radialement externe et interne de ce manchon 5 sont aménagées respectivement en chape externe 5b, à deux branches parallèles entre lesquelles la pale 3 est retenue par son pied 3a, et en chape interne 5c, dont les deux branches parallèles assurent la liaison aux moyens de retenue et d'articulation 4.

De manière connue, le pied de pale 3a est retenu dans la chape externe 5b par deux broches 6 (dont une seule est visible sur la figure 1b) parallèles entre elles, symétriques de part et d'autre de l'axe longitudinal du manchon 5, et sensiblement perpendiculaires à cet axe longitudinal. L'une des broches 6 est amovible, de sorte que la pale 3 peut être repliée manuellement, vers l'avant ou vers l'arrière de l'hélicoptère, après l'arrêt du rotor, par pivotement par rapport au manchon 5 autour de l'autre broche 6.

Comme également connu, les moyens de retenue et d'articulation 4 sont constitués d'une butée lamifiée sphérique, comprenant une partie centrale 4a, constituée d'un empilement alterné de couches d'un matériau élastomérique élastiquement déformable et de coupelles d'un matériau rigide en forme de portions de sphère, entre, d'une part, une armature radiale externe 4b, chevauchant le bord radial externe 2b de l'alvéole 2a correspondant du moyeu 2, et fixé sur ce bord 2b du moyeu par des axes boulonnés métalliques, électriquement conducteurs, tels que 7, et, d'autre part, une armature radiale interne 4c, qui, comme l'armature externe 4b, est métallique et électriquement conductrice. L'armature interne 4c traverse l'alvéole 2a et est fixée en entretoise entre les branches de la chape interne 5c par des axes boulonnés tels que 8, dont les têtes de serrage 8a avec collerette maintiennent un talon supérieur 9 fixé sur l'extrémité radiale interne de la branche supérieure de la chape interne 5c, en regard d'un mécanisme 10 à butée haute de battement, éclipsable en vol, monté sur un support tubulaire 11 boulonné au-dessus de la partie centrale tubulaire du moyeu 2. Le dispositif à butée haute de battement 10, qui peut être surmonté d'un ensemble à coupole profilée et support de coupole et d'élinguage (non décrit et non représenté), n'est pas davantage décrit, car il ne constitue pas une partie de l'invention. Les écrous 8b, vissés sur les extrémités inférieures des axes 8 faisant saillie sous la branche inférieure de la chape interne 5c, maintiennent un talon inférieur 12 fixé sous l'extrémité radiale interne de cette branche inférieure, ce talon inférieur 12 étant maintenu par une entretoise 13 boulonnée sur une bride inférieure du manchon 5, de sorte à positionner le talon 12 radialement en regard d'une butée basse de battement, commune à toutes les pales, et réalisée, de manière connue, sous la forme d'un anneau réciproque 14 monté avec un jeu radial autour du mât rotor 1.

Chaque pale 3 est équipée d'un faisceau de conducteurs électriques dits de "métallisation", pour l'évacuation des charges électrostatiques et pour le passage du courant de foudre, ces conducteurs de métallisation étant intégrés à la pale et s'étendant sur toute l'envergure de celle-ci. De manière connue, ces conducteurs de métallisation sont par exemple réalisés sous la forme de minces rubans ou bandes d'un métal bon conducteur de l'électricité, tel que le cuivre, et l'extrémité radiale interne de ce faisceau conducteur, sous la forme d'un clinquant ou ruban de cuivre 15, émerge à la surface de la pale 3, pour constituer un point de sortie des décharges électrostatiques et du courant de foudre, formant sur la pale 3 une borne électriquement conductrice 15a accessible sur le centre de la face radiale interne du pied de pale 3a.

En regard de la borne conductrice 15a, formée sur le pied de pale 3 par une partie émergente du ruban de cuivre 15 du faisceau de conducteurs de métallisation de la pale 3, le fond de la chape externe 5b du manchon 5 présente, sauf lorsque la pale 3 est repliée par pivotement autour de l'une des broches 6, un mécanisme allégé de contact électrique et élastique permanent, pour assurer l'évacuation des charges électrostatiques de la pale 3 au manchon métallique 5, et pour servir d'éclateur en cas de foudroiement de la pale 3, pour assurer le passage du courant de foudre de la pale 3 au manchon 5.

Ce mécanisme de contact élastique permanent 16 comprend un poussoir 17 à tige cylindrique montée axialement coulissante avec frottement dans un corps tubulaire 18, de sorte qu'une extrémité axiale 17a du poussoir 17 est en saillie à l'extérieur du corps 18, vers la borne 15a et le pied de pale 3a, tandis que l'extrémité axiale opposée du poussoir 17 est aménagée en tête élargie 17b, reçue dans un logement interne 18a du corps 18 et formant butée contre le fond de ce logement 18a, du côté du pied de pale 3a, pour empêcher la sortie du poussoir 17 hors du corps 18, sous la poussée de moyens élastiques de rappel 19 constitués d'un empilement de rondelles ressorts métalliques, ou en variante d'un ressort hélicoïdal métallique de compression. Ces moyens 19 formant ressort sont disposés dans le logement axial 18a du corps 18 et prennent appui, du côté opposé au poussoir 17, sur un bouchon métallique 20 fixé, par exemple par vissage, dans l'extrémité correspondante de l'alésage formant le logement 18a, lequel peut éventuellement contenir également de la graisse. Le poussoir 17 et le corps 18 sont métalliques et électriquement conducteurs, ainsi d'ailleurs que les moyens 19 formant ressort et le bouchon 20. Le corps 18 est implanté, par vissage de sa partie entourant le bouchon 20, dans la partie centrale d'un fond radial externe métallique 21a d'un bol à grenaille 21, fermé par une partie radiale interne 21b solidarisée au fond 21a, qui est monté en entretoise entre les deux branches opposées de la chape externe 5b, et retenu dans cette position à l'aide d'une broche métallique tubulaire 22, dont la partie centrale, traversant le bol à grenaille 21, présente une large ouverture latérale 22a, mettant l'intérieur de la broche tubulaire 22 en communication avec l'intérieur du bol à grenaille 21, et dont les parties d'extrémité traversent chacune l'une respectivement des branches de la chape 5b, de sorte que les extrémités de la broche 22 soient en saillie l'une au-dessus de la branche supérieure et l'autre en-dessous de la branche inférieure de la chape 5b, en étant fermées par des bouchons amovibles 22b, pour permettre le remplissage du bol 21 avec de la grenaille et sa vidange, afin d'assurer, à l'aide d'une plus ou moins grande quantité de grenaille dans le bol 21, l'équilibrage de la masse battante constituée de la pale 3 et du manchon 5 et articulée sur le moyeu 2 par la butée lamifiée sphérique 4. Le bol à grenaille 21 est métallique et électriquement conducteur dans ses deux parties 21a et 21b, et son fond 21a est, de par son montage, en contact conducteur avec, d'une part, les deux branches de la chape 5b du manchon 5, et, d'autre part, avec le corps 18, formant support coulissant pour le poussoir conducteur 17, avec lequel le corps 18 est également en contact conducteur.

La structure et le montage du mécanisme de contact élastique permanent 16 sont tels que le poussoir 17 est en permanence repoussé par les moyens élastiques 19 de sorte que son extrémité de tige 17a fasse saillie radialement vers l'extérieur par rapport au corps 18.

En position repliée de la pale 3 par rapport au manchon 5, on comprend que l'extrémité 17a du poussoir 17 n'est pas en contact avec la borne 15a du pied de pale 3a. Par contre, lorsque la pale est ramenée en configuration de vol et fixée par son pied 3a dans la chape 5b par les deux broches 6, la borne 15a vient en contact avec l'extrémité 17a du poussoir conducteur 17 et repousse ce dernier dans le corps conducteur 18 à l'encontre des moyens élastiques 19, ce qui assure la continuité électrique entre la borne 15a et le manchon 5 par l'intermédiaire du poussoir 17, du corps 18, du bol à grenaille 21, et éventuellement aussi de la broche tubulaire 22.

En variante, la borne conductrice 15a sur le pied de pale 3a peut être une borne de structure plus massive qui est collée à demeure sur la pale 3 ou bien vissée dans un réceptacle collé sur la pale 3, mais toujours de sorte à être en continuité électrique avec le faisceau de conducteurs de métallisation de cette pale.

En configuration de vol de la pale 3, la continuité électrique entre la pale 3 et le manchon 5 est en permanence assurée par le maintien élastique du poussoir 17 en contact avec la borne 15a.

L'intérêt de cette réalisation, outre sa simplicité et sa faible masse, réside dans l'élimination des cheminements aériens obligatoires sur une liaison par tresse conductrice entre la pale et le manchon, ce cheminement aérien étant d'autant plus important lorsque la pale doit présenter une capacité de repliage, et cette réalisation évite aussi les liaisons, vis, rondelles et écrous freinés obligatoires aux deux extrémités d'une tresse de liaison. Le mécanisme 16 est d'un faible coût et facilement démontable en cas de détérioration par la foudre. L'essai à la foudre (amorce au courant) est de plus possible, en raison du contact permanent entre la borne 15a et le poussoir 17, ce qui n'est pas le cas pour un éclateur de structure conventionnelle.

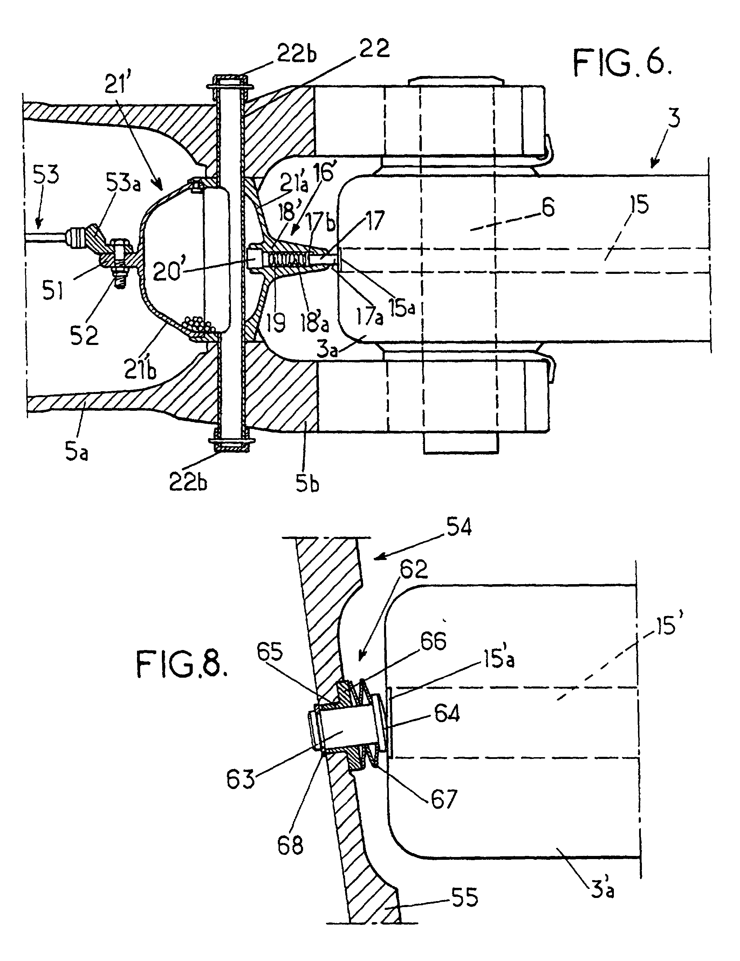

La figure 6 représente une variante qui se distingue essentiellement de la réalisation de la figure 1b par le mode de solidarisation du corps du mécanisme de contact élastique permanent sur le manchon 5, de sorte que les éléments identiques ou les éléments analogues à ceux de la figure 1b sont repérés sur la figure 6 par respectivement des références identiques ou les mêmes références affectées d'un symbole prime.

Sur la figure 6, le mécanisme 16' de contact élastique permanent a son corps tubulaire 18' d'une seule pièce avec le fond externe 21'a en aluminium du bol à grenaille 21', et en saillie sensiblement radiale vers l'extérieur sur la partie centrale de ce fond 21'a. Le bouchon conducteur 20' est serti dans l'extrémité correspondante du logement interne 18'a du corps 18' logeant également les moyens de rappel élastique 19 constitués par l'empilement conducteur des rondelles ressort, et la tête 17b du poussoir 17 conducteur et coulissant, dont l'extrémité 17a en saillie à l'extérieur du corps 18' est repoussée en contact vers la borne 15a du pied de pale 3a, selon un mécanisme qui fonctionne comme celui de la figure 1b, en étant intégré par son corps dans le bol à grenaille 21', monté dans la chape 5b du manchon 5 également comme sur la figure 1b.

Une autre différence est que la partie interne 21'b du bol à grenaille 21' présente, en saillie sensiblement radiale vers l'intérieur, une patte 51 sur laquelle est fixée par un boulon 52 une cosse 53a d'extrémité d'un conducteur de métallisation 53 à tresse métallique conductrice réalisé selon FR-A-2 679 074, et dont l'autre cosse d'extrémité peut être fixée sur le support conducteur 23 (décrit ci-dessous en référence à la figure 1a) ou, éventuellement, directement sur la partie conductrice 2b du moyeu 2 ou tout élément électriquement conducteur fixé sur cette partie de moyeu 2b, pour assurer la continuité électrique entre la pale 3 et le moyeu 2, en parallèle au manchon 5 ou à la place de ce dernier, lorsqu'il est réalisé par exemple en matériau composite non électriquement conducteur.

L'installation pour l'évacuation des charges électrostatiques et le passage du courant de foudre comprend non seulement les moyens de mise en continuité électrique entre la pale 3 et le manchon 5 qui viennent d'être décrits en référence à la figure 1b ou à la figure 6, et qui comprennent le mécanisme de contact élastique permanent 16 ou 16', mais également des moyens de mise en continuité électrique entre le manchon 5 et le moyeu 2, ces moyens étant à présent décrits en référence à la figure 1a.

Dans cet exemple, la métallisation, c'est-à-dire l'évacuation des charges électrostatiques, et le passage du courant de foudre sont assurés par des cheminements différents entre, d'une part, un support électriquement conducteur 23, fixé par des axes boulonnés 24, métalliques et électriquement conducteurs, contre la face interne de la partie supérieure du manchon 5, à l'extrémité de sa partie tubulaire 5a voisine de la chape interne 5c, et, d'autre part, le moyeu 2, et plus précisément le bord radial externe 2b de ce moyeu 2, correspondant à l'alvéole 2a qui loge la butée lamifiée sphérique 4 d'articulation de ce manchon 5 sur le moyeu 2. Ce support 23 présente, du côté de la chape interne 5c, un pion 25, électriquement conducteur, pour l'accrochage d'une extrémité d'un ressort 26 hélicoïdal de compression électriquement conducteur, dont l'autre extrémité est accrochée et retenue autour d'un pion électriquement conducteur 27 à l'extrémité d'une patte 28 d'une borne électriquement conductrice 29 fixée contre l'armature externe 4b métallique et électriquement conductrice de la butée lamifiée sphérique 4 par l'un des axes boulonnés 7 électriquement conducteurs fixant cette armature 4b sur le bord radial externe 2b du moyeu 2. Ainsi, le support conducteur 23, en contact conducteur avec le manchon conducteur 5, est en continuité électrique avec le bord 2b du moyeu 2 par l'intermédiaire du pion 25, du ressort 26, du pion 27 et de la patte 28 de la borne conductrice 29 fixée au moyeu 2 par l'intermédiaire de l'armature 4b. Le passage des charges électrostatiques, ou métallisation, entre le manchon 5 et le moyeu 2 est ainsi assuré en continu par le ressort 26, lié d'un côté à la borne conductrice 29 fixée sur le moyeu 2 avec la butée lamifiée sphérique 4, et de l'autre côté au support 23 fixé sur le manchon 5. Le ressort 26 est précontraint en traction, de sorte à compenser les écarts de distance relative entre ses attaches sur les pions 25 et 27, pendant le fonctionnement, en raison des débattements angulaires du manchon 5 et de la pale 3 en pas, battement et traînée autour du centre d'articulation Cb de la butée 4, ce centre d'articulation Cb étant situé dans le bord radial externe 2b du moyeu 2.

A titre d'exemple, partant d'une longueur initiale de 94 mm pour le ressort 26 précontraint en traction, ce ressort 26 subit une déformation en compression de 12 mm avec un battement de la masse battante (manchon 5 et pale 3) de 10° vers le haut, une déformation en traction de 9 mm avec un battement de 8° vers le bas, une déformation en traction de 5 mm pour un pas de 27°, et une déformation en traction de 0,1 mm pour une traînée de 6° (vers l'avant ou vers l'arrière par rapport au sens de rotation du rotor). On constate que ces valeurs de déformation, combinées ou non, sont parfaitement admises par le ressort 26.

Le passage du courant de foudre est permis par un éclateur en forme d'aiguille 31 qui est vissée par sa partie arrière 31a filetée dans un alésage taraudé du support 23, et fixée en position par un contre-écrou 32, également vissé autour de la partie filetée 31a de l'aiguille 31 et serré contre le corps 23, de sorte que la pointe 31b de l'aiguille 31 soit dirigée radialement vers le centre d'articulation Cb de la butée lamifiée sphérique 4, et sans contact avec une piste en forme de calotte sphérique 30 de la borne conductrice 29, cette piste 30 étant centrée sur le centre d'articulation Cb, et présentant ainsi sa convexité radialement vers l'extérieur, c'est-à-dire vers l'aiguille 31. Cette dernière est montée sur le support 23 à proximité du pion 25 d'attache du ressort 26, servant d'appel électrique. Quelle que soit la position du manchon 5 en pas, battement et traînée autour du centre d'articulation Cb, l'aiguille 31 dirige sa pointe 31b vers ce centre d'articulation Cb, et il n'y a jamais contact entre la piste en calotte sphérique 30 de la butée 29 et la pointe 31b de l'aiguille 31, pendant le mouvement relatif de rotulage du manchon 5 autour de la butée lamifiée sphérique 4, car, à l'arrêt du rotor, il existe un jeu minimum (par exemple de 0,3 à 0,6 mm) entre l'aiguille 31 et la piste 30, et ce jeu minimum est augmenté, lorsque le rotor tourne, en raison de l'écrasement sous charge (effort centrifuge et facteur de charge en vol) de la butée lamifiée sphérique 4 à la fois dans le plan du rotor et selon l'axe A-A de ce dernier.

Le ressort 26, maintenu élastiquement en contact permanent avec la borne 29, et qui peut être remplacé par deux ressorts montés en parallèle, si nécessaire, ainsi que l'aiguille 31 et le support 23 sont visibles et accessibles latéralement entre les deux branches de la chape interne 5c, ce qui favorise la maintenance. Eventuellement, seule une butée de traînée (non représentée sur la figure 1a), boulonnée latéralement sur le manchon 5, peut être amenée à être démontée de ce manchon 5 pour une meilleure accessibilité de maintenance. Pour que l'installation soit légère et économique, la borne 29, le support 23, l'aiguille 31 et son contre-écrou 32 sont réalisés en un matériau de bonne conductibilité électrique et de faible densité, tel que l'aluminium. En outre, un fil de freinage 33 est implanté dans l'aiguille 31, dans le contre-écrou 32 et dans le support 23, pour éviter le desserrage du contre-écrou 32 solidarisant l'aiguille 31 au support 23.

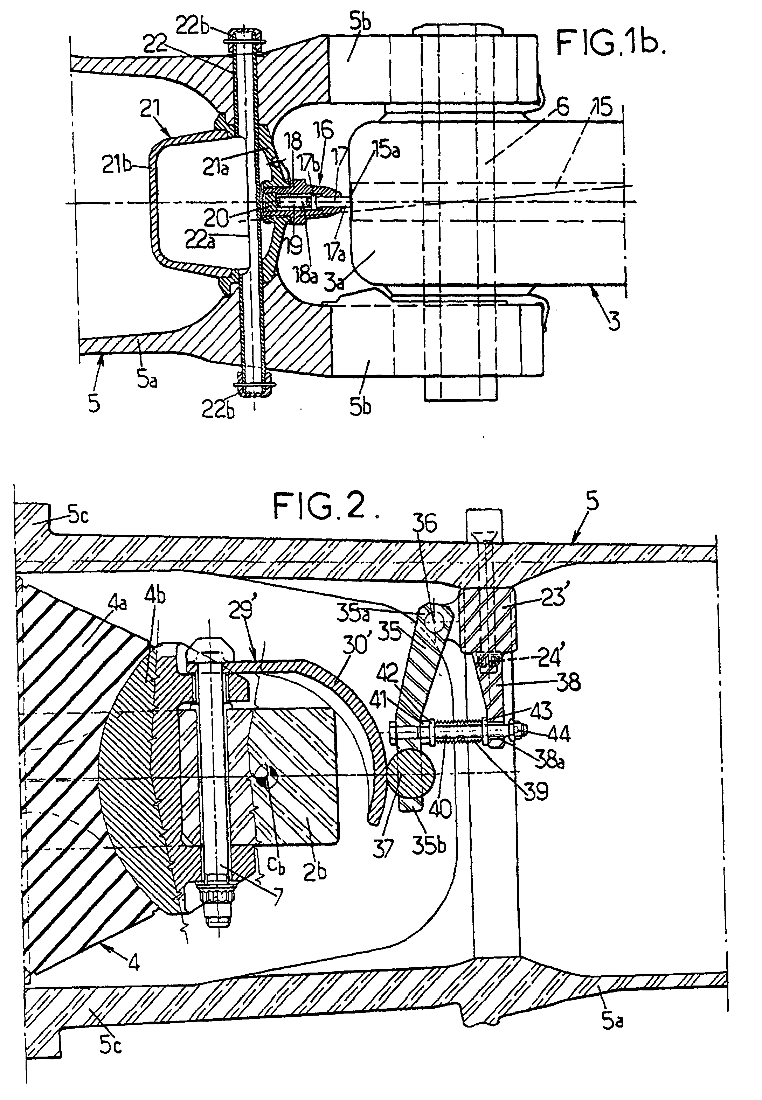

La variante de la figure 2 ne diffère de l'exemple décrit ci-dessus en référence aux figures la et 1b que par la réalisation des moyens de mise en continuité électrique entre le manchon 5 et le moyeu 2, de sorte que l'on se limite ci-dessous à décrire les moyens particuliers à cette variante de la figure 2 pour assurer la continuité électrique à ce niveau, les moyens analogues à ceux de l'exemple précédent étant repérés par les mêmes références numériques affectés d'un symbole prime.

Dans cette variante, on retrouve une borne électriquement conductrice 29' comportant une piste 30' en forme de calotte sphérique centrée sur le centre d'articulation Cb de la butée lamifiée sphérique 4, et présentant sa convexité radialement vers l'extérieur, et la borne 29' est fixée à la partie électriquement conductrice et métallique du moyeu 2 formant le bord radial externe 2b de l'alvéole 2a correspondant par un axe boulonné 7 métallique et électriquement conducteur, qui applique la borne 29' en contact conducteur contre l'armature externe métallique et électriquement conductrice 4b de la butée 4, cette armature 4b étant elle-même en contact électriquement conducteur avec le bord radial externe 2b du moyeu 2, comme dans l'exemple précédent. Cependant, dans cette variante, la borne 29' et sa piste en calotte sphérique 30' sont en acier cémenté. On retrouve également, radialement vers l'extérieur de la piste sphérique 30', un support 23', métallique et électriquement conducteur, fixé en contact conducteur contre la face interne de la paroi supérieure du manchon 5, dans l'extrémité de sa partie tubulaire 5a qui est voisine de la chape interne 5c, par des axes boulonnés 24' métalliques et électriquement conducteurs.

Mais, à la différence du premier exemple, dans cette variante un bras oscillant 35 métallique et électriquement conducteur est monté pivotant par une extrémité 35a autour d'un axe de pivot 36 porté par le support 23' et orienté sensiblement perpendiculairement à l'axe longitudinal du manchon 5 ainsi qu'à l'axe de rotation A-A du rotor, tandis qu'une bille d'acier cémenté 37, donc électriquement conductrice, est sertie dans l'autre extrémité 35b du bras 35, qui est légèrement coudé entre ses extrémités. Le bras 35 et le support 23' sont par exemple en un alliage léger conducteur, tel qu'un alliage d'aluminium, et la continuité électrique entre le manchon 5 et la bille conductrice 37 est assurée au travers du support 23', de son axe de pivot 36 et du bras 35. La bille 37 est en contact élastique permanent et électriquement conducteur avec la piste sphérique 30' de la borne 29' montée sur le moyeu 2 et en continuité électrique avec lui, pour l'évacuation des charges électrostatiques et également le passage du courant de foudre par un cheminement commun, grâce à des moyens élastiques de rappel 39, constitués par un empilement de rondelles ressorts métalliques ou, en variante, par un ressort hélicoïdal métallique, ces moyens élastiques de rappel 39 étant montés entre une patte 38 d'une seule pièce avec le support 23' et qui prolonge ce dernier vers l'intérieur du manchon 5 et vers son axe longitudinal, d'une part, et, d'autre part, le bras oscillant 35, dans sa partie coudée à proximité de la bille 37. Le contact permanent élastique et conducteur de cette bille 37 contre la piste sphérique 30', en tenant compte de l'effort (en opposition) d'inertie de la bille 37, est obtenu par la compression des rondelles ressorts ou du ressort hélicoïdal constituant les moyens élastiques de rappel 39. Ces derniers sont montés autour d'un axe 40, qui est une vis traversant le bras 35 et retenue par sa tête contre la face du bras 35 tournée vers la piste sphérique 30', l'axe 40 étant fixé au bras 35 par un écrou de blocage 41, vissé sur la tige filetée de la vis qui s'étend vers la patte 38 du support 23' et traverse une lumière 38a ménagée dans cette patte 38, l'écrou de blocage 41 étant serré contre la face du bras 35 qui est tournée vers la patte 38. L'empilage des rondelles ressorts ou le ressort hélicoïdal constituant les moyens élastiques 39 prend appui, du côté du bras 35, contre une rondelle 42, entourant la tige de l'axe 40 et contre l'écrou de blocage 41, et du côté de la patte 38, contre une rondelle analogue 43 autour de la tige de l'axe 40 et en appui contre la face de la patte 38 qui est tournée vers le bras 35. Un écrou 44 à double freinage est vissé et immobilisé sur l'extrémité libre de la tige de l'axe 40, au-delà de la patte 38 et vers l'intérieur du manchon 5, pour que cet écrou 44 serve de butée, par contact contre la patte 38, pour limiter le pivotement du bras 35 dans un sens qui l'éloigne de la patte 38 sous l'action des moyens ressorts 39, lorsque ce mécanisme est démonté du manchon 5 ou avec ce dernier. L'axe 40 est retenu sur la patte 38 du support 23' avec un jeu axial important entre cette patte 38 et la butée 44 limitant l'amplitude d'oscillation du bras 35. Ce jeu axial important est prévu pour permettre les déplacements axiaux de l'axe 40 par rapport à la patte 38 lorsque la bille 37 et le bras 35 sont entraînés par le support 23' et le manchon 5 dans les débattements en pas, battement et traînée de ce manchon par rapport au moyeu 2, sur lequel la borne 29' avec sa piste sphérique 30' est fixe.

L'exemple des figures 3 à 5 est très analogue à celui de la figure 2, dont il ne constitue en fait qu'une variante de montage, de sorte que les mêmes références numériques affectées d'un symbole prime ou seconde sont utilisées pour désigner les éléments analogues.

Dans cette variante, dans laquelle la métallisation et le passage du courant de foudre s'effectuent par le même cheminement, comme dans l'exemple de la figure 2, on retrouve une bille en acier cémenté 37' sertie dans une extrémité d'un bras coudé oscillant 35' électriquement conducteur monté pivotant par son autre extrémité sur un axe de pivot 36', également électriquement conducteur et avec lequel le bras 35' est en contact conducteur, d'un support lui-même conducteur et qui est, dans cet exemple, une butée de traînée 45 montée amovible latéralement en contact conducteur sur le manchon 5 par deux boulons 46 (voir figure 3) sur une bride latérale 5d de l'extrémité de la partie tubulaire 5a du manchon 5 qui est adjacente à la chape interne 5c. Dans cette position, la butée de traînée 45 est fixée sur le manchon 5 directement en regard d'une butée de traînée 47 (voir figure 3) en saillie vers l'extérieur sur le bord radial externe 2b correspondant du plateau de moyeu 2, pour limiter les mouvements de traînée de la pale 3 et du manchon 5 d'un côté (vers l'arrière ou vers l'avant par rapport au centre de rotation du rotor).

On retrouve également une piste en calotte sphérique 30", électriquement conductrice et en contact conducteur sur une borne conductrice 29" sur laquelle la piste 30" est soudée, ou retenue par un circlip, ou tout autre moyen de fixation et de blocage. Dans cette variante, la borne 29" est conformée en équerre pour faciliter sa fixation par deux axes boulonnés électriquement conducteurs sur l'armature externe de la butée lamifiée sphérique de liaison du manchon 5 au moyeu 2, ces axes boulonnés (non représentés) traversant deux trous 48 ménagés dans la partie de l'équerre 29" qui est sensiblement perpendiculaire à sa partie présentant la piste sphérique 30".

Cette réalisation se distingue de la précédente (figure 2) par le fait que le pivotement du bras oscillant 35' s'effectue "à l'horizontale", c'est-à-dire pratiquement dans le plan de rotation du rotor, qui est un plan sensiblement perpendiculaire à l'axe de rotation du rotor, et non "à la verticale", c'est-à-dire dans un plan radial passant par l'axe de rotation du rotor comme sur la figure 2. La disposition des figures 3 à 5 évite d'avoir à percer le manchon 5 dans sa paroi supérieure pour le passage des axes boulonnés 24' fixant le support 23' de la figure 2 sur le manchon 5. Dans la variante des figures 3 à 5, le bras 35' est monté oscillant sur une pièce non vitale, qui existe pour d'autres fonctions, c'est-à-dire la butée de traînée 45, qui est fixée amovible sur le manchon 5. Le bras oscillant 35' équipé de sa bille cémentée 37' est plaqué, par un empilage de plusieurs lames ressorts 39', travaillant en flexion, sur la piste sphérique 30" solidaire de la borne conductrice 29" conformée en équerre et qui se fixe sur la partie conductrice 2a du moyeu 2. Ces lames ressorts 39' sont fixées au bras oscillant 35' par l'une de leurs parties d'extrémité, à l'aide de rivets 49 (ou de boulons ou autres moyens de fixation), tandis que les lames ressorts 39' prennent appui par leur autre extrémité contre la butée de traînée 45. La démontabilité de l'ensemble constitué du bras oscillant 35' avec sa bille 37' et de la butée de traînée 45 s'effectue aisément par les boulons 46, sur le côté correspondant du manchon 5.

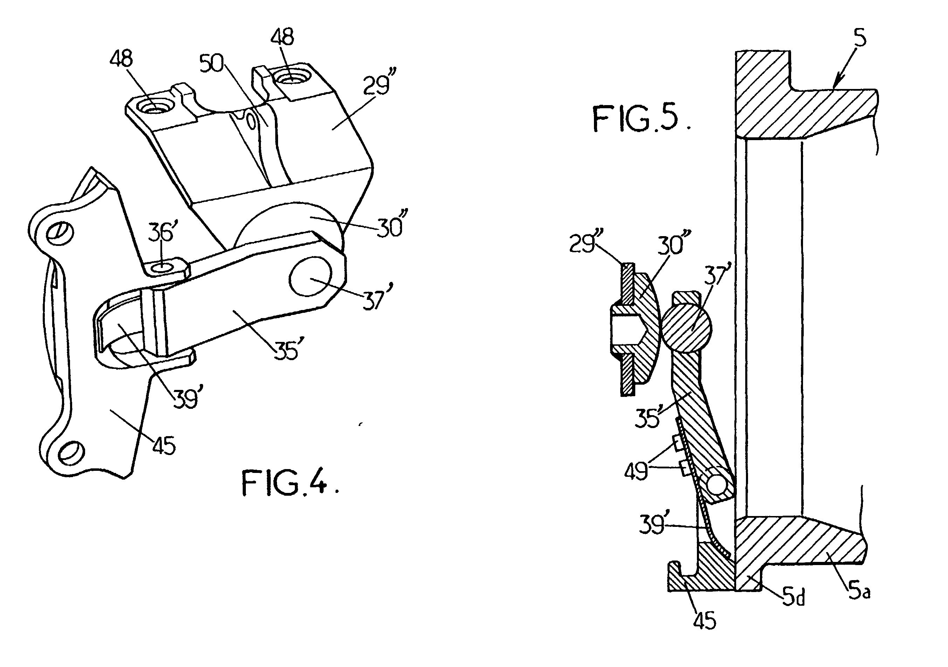

Dans le cas où le manchon 5 n'est pas métallique, mais constitué par exemple de deux plaques en matériau composite maintenues espacées l'une de l'autre par des entretoises pour former les chapes interne 5c et externe 5b, ou aussi en l'absence d'un système de métallisation du type proposé par exemple entre le manchon et le moyeu, la continuité électrique entre le bord de moyeu 2a ou l'armature externe 4b ou la borne 29 ou 29' ou le support 23 de la figure la ou 23' de la figure 2 ou la butée de traînée 45 des figures 3 à 5, d'une part, et, d'autre part, le bol à grenaille 21 ou 21' de la figure 1b ou 6 peut être assurée par un câble conducteur, de préférence du type décrit dans FR-A-2 679 074. En variante, ce câble de métallisation peut être directement accroché, par une extrémité, sur une patte d'accrochage 50 en saillie sur la borne 29" en équerre, comme représenté sur la figure 4. Dans ce cas, ce câble conducteur assure la continuité électrique directement du bol à grenaille 21 à la borne conductrice 29", et donc au moyeu 2. La disposition d'un tel câble conducteur à l'intérieur du manchon 5 ou entre deux plaques de composite maintenues espacées par les entretoises pour constituer un organe de liaison équivalent au manchon 5, avec ce câble conducteur lié d'un côté au moyeu 2 à proximité du centre d'articulation de la butée sphérique lamifiée 4, et, de l'autre côté, au bol à grenaille 21, en un point assez loin en envergure dans le manchon 5, présente les avantages d'une limitation importante des mouvements de ce câble conducteur par rapport à un montage externe, et d'une sécurité accrue en cas de rupture intempestive de ce câble conducteur, ce dernier n'étant pas éjecté et restant dans le manchon 5. Les mêmes avantages sont obtenus, en l'absence de borne 29", de bras pivotant 35' et de butée de traînée 45, lorsque le câble conducteur, tel le câble 53 de la figure 6, relie le bol à grenaille 21' à une équerre, analogue à celle de la borne 29", fixée au bord du moyeu 2a directement ou par l'intermédiaire de l'armature externe 4b.

Comme décrit dans le brevet français précité, ce câble conducteur peut comporter une tresse conductrice renforcée en son milieu par un câble métallique tenu à ses deux extrémités par des embouts en forme d'olives sertis dans leur cosse respective.

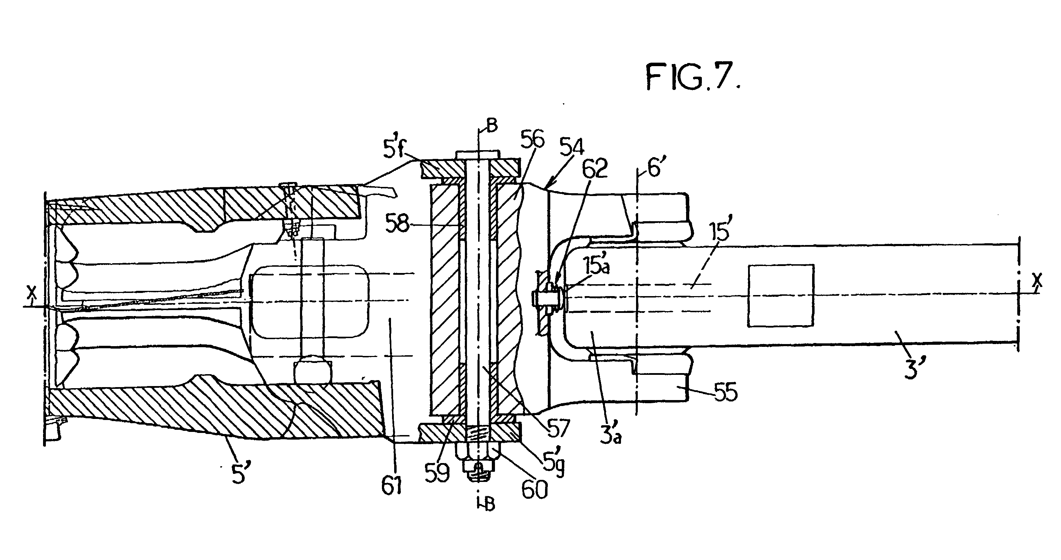

La figure 7 représente une variante de la figure 1b pour un rotor sur lequel, de manière connue, chaque pale peut être automatiquement repliée par pivotement par rapport à son manchon de liaison au moyeu, grâce à un actionneur disposé dans le manchon et faisant pivoter sur ce dernier une ferrure de repliage à laquelle la pale est fixée par son pied, de sorte que les éléments analogues sont repérés par les mêmes références numériques affectées du symbole prime.

Chaque pale 3' a son pied 3'a fixé par deux broches parallèles, côte-à-côte de part et d'autre de l'axe longitudinal X-X du manchon 5' et de la pale 3', et repérées uniquement par leur axe 6' sur la figure 7, dans une chape 55 d'une ferrure de repliage 54, qui est montée pivotante sur la partie radiale externe du manchon 5', autour d'un axe géométrique de repliage B-B décalé latéralement par rapport à l'axe X-X longitudinal du manchon 5', et sensiblement parallèle à l'axe A-A de rotation du rotor (voir fig. 1a). Ce pivotement de la ferrure 54 sur le manchon 5' est assuré grâce à un palier cylindrique et latéral 56, déporté sur un côté de la ferrure 54, et qui tourillonne autour d'un axe 57 de l'articulation de repliage. Le palier 56 de la ferrure 54 est monté et retenu dans une chape radiale externe et latérale à branches supérieure 5'f et inférieure 5'g du manchon 5', par l'axe 57, autour duquel le palier 56 tourillonne grâce à des bagues épaulées 58 et 59 montées autour de l'axe 57 et engagées dans le palier 56, et chacune en appui par leur épaulement contre une face respectivement supérieure et inférieure du palier 56, un écrou 60 étant vissé et retenu sur l'extrémité inférieure filetée de l'axe 57 qui fait saillie sous la branche inférieure de chape 5'g. L'axe 57 est coaxial à l'axe de pivotement B-B pour obtenir le pivotement de la ferrure 54 par la manoeuvre d'un actionneur schématisé en 61 sur la figure 7, et fixé par son corps dans le manchon 5', par tout moyen approprié. De l'autre côté de l'axe X-X par rapport au palier 56, la ferrure 54 présente une butée (non représentée sur la figure 7) tournée vers le manchon 5' et venant se loger dans un logement (également non représenté) ouvert radialement vers l'extérieur de ce manchon 5', en position de la ferrure 54 non repliée par l'actionneur 61, et qui correspond à la configuration de vol (figure 7).

Dans cette réalisation, la continuité électrique entre la pale 3' et la ferrure 54 est assurée par un autre mécanisme de contact élastique permanent 62, représenté de manière détaillée à plus grande échelle sur la figure 8.

Ce mécanisme 62 est implanté dans la partie centrale du fond de la chape 55 de la ferrure 54, de sorte à être en regard de l'extrémité radiale interne du pied de pale 3'a, et plus précisément de la borne conductrice 15'a constituée par la partie émergente, à ce niveau, d'un conducteur de métallisation 15', constitué d'un ruban de cuivre, par ailleurs noyé dans la pale 3'.

Le mécanisme 62 comprend un pion de contact cylindrique 63 à tête élargie présentant une portée de contact en calotte sphérique 64 tournée vers le pied de pale 3'a, le pion 63 coulissant axialement avec contact par son corps dans une bague épaulée 65, qui est montée dans un alésage ménagé dans le fond de la chape 55 de la ferrure 54, et en appui par son épaulement 66 contre ce fond de la chape 55. Un empilement de quelques rondelles ressorts 67, monté entre l'épaulement 66 et la tête 64 du pion 63, repousse le pion 63 vers le pied de pale 3'a, pour assurer un contact élastique permanent de la tête 64 contre la borne conductrice 15'a de la pale 3', lorsque cette pale 3' est montée dans la ferrure 54. Lorsque la pale 3' est démontée de la ferrure 54, le déplacement du pion 63 sous l'action des rondelles ressorts 67 (ou de tout autre moyen élastique de rappel équivalent) est limité par un circlip 68 monté autour de la partie d'extrémité du pion 63 du côté opposé à sa tête 64, ce montage autorisant un recul du pion 63, à l'encontre des rondelles ressorts 67, sous la poussée de la pale 3' au montage dans la ferrure 54.

Le pion 63 et sa tête 64, la bague épaulée 65 et les rondelles ressorts 67 étant électriquement conducteurs, de même que la ferrure 54, on comprend que la continuité électrique est assurée par ces organes entre la borne 15'a conductrice du pied de pale 3'a et la ferrure 54. On note que le pion 63, peut être installé avec un petit angle entre son axe longitudinal et l'axe X-X longitudinal commun du manchon 5' et de la pale 3' avec la ferrure 54 en configuration de vol.

Enfin, la continuité électrique entre la ferrure 54 et le manchon 5' est assurée par contact des matériaux électriquement conducteurs de la ferrure 54, et donc de son palier 56, des bagues épaulées 58 et 59, et de l'axe de repliage 57, en contact conducteur avec les branches 5'f et 5'g de la chape du manchon 5' recevant la ferrure 54.

En variante, et comme précédemment, si le manchon 5' n'est pas électriquement conducteur, par exemple en matériau composite, un câble conducteur à tresse de métallisation peut être relié, par une extrémité, à l'axe de repliage 57, ou directement au pion de contact 63, si la ferrure de repliage 54 est également non électriquement conductrice, l'autre extrémité du câble de métallisation pouvant être reliée au support conducteur 23 ou 23' de la figure la ou de la figure 2, ou encore directement au bord du moyeu 2b, à l'armature externe 4b ou à tout autre organe électriquement conducteur fixé sur cette partie de moyeu 2a, par exemple une borne conductrice telle que 29 ou 29', sans que celle-ci ait, dans ce cas, besoin de présenter une piste de contact sphérique. Dans cette variante, on retrouve les avantages liés à la présence d'un câble conducteur s'étendant dans le manchon 5', comme ils ont été présentés ci-dessus.

## Revendications

1. Rotor de giravion avec une installation de mise en continuité électrique, pour l'évacuation des charges électrostatiques et le passage du courant de foudre sur le rotor, lequel est du type comprenant :
- un moyeu (2), solidaire en rotation d'un mât rotor (1) autour d'un axe de rotation (A-A), et tel que l'ensemble mât-moyeu (1-2) comporte au moins une partie métallique (2b) en continuité électrique avec la structure du giravion, et
- au moins deux pales (3), dont chacune est reliée au moyeu (2) par l'intermédiaire d'un organe de liaison (5) sensiblement radial par rapport à l'axe de rotation (A-A), et lui-même relié au moyeu (2) par des moyens de retenue et d'articulation (4),
chaque pale (3) comprenant au moins un conducteur électrique (15) de passage des charges électrostatiques et du courant de foudre, relié à ladite partie métallique (2b) de l'ensemble mât-moyeu (1-2) par des moyens de mise en continuité électrique de l'installation,
**caractérisé en ce que** lesdits moyens de mise en continuité électrique comprennent, pour chaque pale (3), au moins un premier organe électriquement conducteur (26, 37, 37'), solidaire de l'organe de liaison (5) correspondant dans ses débattements en pas, battement et traînée avec ladite pale (3), par rapport au moyeu (2), et de sorte à être en continuité électrique avec ledit conducteur électrique (15) de la pale (3), et maintenu élastiquement en contact permanent avec une première borne électriquement conductrice (29, 29', 29"), solidaire du moyeu (2), et en continuité électrique avec ladite partie métallique (2b) de l'ensemble mât-moyeu (1-2).

2. Rotor selon la revendication 1, **caractérisé en ce que** ledit premier organe conducteur (37, 37') est monté sur un bras oscillant (35, 35') sur un premier support (23', 45) fixé audit organe de liaison (5), le bras (35, 35') étant sollicité par des premiers moyens élastiques de rappel (39, 39') appliquant le premier organe conducteur (37, 37') en contact élastique contre ladite première borne (29', 29").

3. Rotor selon la revendication 2, **caractérisé en ce que** ledit premier organe conducteur (37, 37') est monté en contact conducteur sur le bras oscillant (35, 35'), qui est électriquement conducteur, et en contact conducteur avec ledit premier support (23', 45), électriquement conducteur et en continuité électrique avec ledit conducteur (15) de la pale (3), lesdits premiers moyens élastiques (39, 39') prenant appui sur ledit premier support.

4. Rotor selon la revendication 3, **caractérisé en ce que** lesdits premiers moyens élastiques de rappel (39) sont montés entre ledit bras (35) et ledit premier support (23', 38), autour d'un axe (40) fixé au bras (35), et déplaçable axialement par rapport au premier support (23', 38), sur lequel l'axe (40) est retenu, avec un jeu axial, par une butée (44) limitant l'amplitude d'oscillation du bras (35).

5. Rotor selon la revendication 3, **caractérisé en ce que** lesdits premiers moyens élastiques de rappel comprennent au moins une lame ressort (39') fixée par une partie d'extrémité sur le bras oscillant (35') et élastiquement en appui par une autre partie d'extrémité contre ledit premier support (45), supportant également au moins une butée de traînée de la pale (3) correspondante, et rapporté sur ledit organe de liaison (5), ladite lame ressort (39') travaillant en flexion pour appliquer ledit premier organe conducteur (37') contre ladite première borne (29").

6. Rotor selon l'une quelconque des revendications 3 à 5, **caractérisé en ce que** ledit premier organe conducteur est une bille (37, 37') en acier cémenté, sertie dans une extrémité du bras oscillant (35, 35') monté pivotant, par son autre extrémité, autour d'un axe (36, 36') sensiblement perpendiculaire à la direction radiale de l'organe de liaison (5) correspondant, et ladite première borne (29', 29") comprend une piste (30', 30") en calotte sphérique en saillie sensiblement radiale vers l'extérieur, et sensiblement centrée sur un centre d'articulation (Cb) desdits moyens de retenue et d'articulation (4) correspondants, pour recevoir l'appui élastique de ladite bille (37, 37') pendant les débattements angulaires en pas, battement et traînée de l'organe de liaison (5) et de la pale (3) par rapport au moyeu (2) et autour dudit centre d'articulation (Cb).

7. Rotor selon la revendication 1, **caractérisé en ce que** ledit premier organe conducteur (26) est élastiquement déformable et de longueur variable, tel qu'un ressort hélicoïdal, de préférence précontraint, pour l'évacuation des charges électrostatiques, et lié, d'une part, à un premier support électriquement conducteur (23) monté sur ledit organe de liaison (5), et en continuité électrique avec ledit conducteur (15) de la pale (3), et, d'autre part, à ladite première borne (29), lesdits moyens de mise en continuité électrique comprenant de plus, pour chaque pale (3) et pour le passage du courant de foudre, un éclateur en forme d'aiguille (31) électriquement conductrice, fixée à proximité dudit premier organe conducteur (26) sur ledit premier support (23) conducteur et de sorte que sa pointe (31b) est dirigée vers un centre d'articulation (Cb) desdits moyens de retenue et d'articulation (4), en étant espacée d'un faible jeu d'une piste (30) en forme de calotte sphérique, en saillie sensiblement radiale vers l'extérieur et sensiblement centrée sur ledit centre d'articulation (Cb), de ladite seconde borne (29).

8. Rotor selon l'une quelconque des revendications 1 à 7, **caractérisé en ce que** ladite première borne (29, 29', 29") est fixée au moyeu (2) par des moyens (7) électriquement conducteurs de fixation desdits moyens de retenue et d'articulation (4) correspondants à une partie métallique (2b) conductrice du moyeu (2) en continuité électrique avec la structure du giravion.

9. Rotor selon la revendication 8 telle que rattachée à l'une des revendications 6 et 7, **caractérisé en ce que** la partie radiale interne de chaque organe de liaison (5) est agencée en chape interne (5c), et les moyens de retenue et d'articulation correspondants comprennent une butée lamifiée sphérique (4), avec une armature radiale interne (4c) fixée entre les branches de la chape interne (5c) et une armature radiale externe (4b) fixée par au moins un axe boulonné (7) électriquement conducteur sur ladite partie métallique (2b) du moyeu (2), qui est engagée dans la chape interne (5c), et dans laquelle se situe le centre d'articulation (Cb) de ladite butée lamifiée sphérique (4), la borne (29, 29', 29") à piste en calotte sphérique (30, 30', 30") étant fixée au moyeu (2) par ledit axe boulonné (7), de sorte que la piste (30, 30', 30") en calotte sphérique est disposée dans la chape interne (5c) avec sa convexité tournée sensiblement radialement vers l'extérieur, ledit premier organe conducteur (26, 37, 37'), ledit premier support conducteur (23, 23', 45), et, le cas échéant, lesdits premiers moyens élastiques de rappel (39, 39') et ledit bras oscillant (35, 35') ou ladite aiguille d'éclateur (31) étant également montés dans ladite chape interne (5c).

10. Rotor selon l'une quelconque des revendications 1 à 9, **caractérisé en ce que** lesdits moyens de mise en continuité électrique comprennent également, pour chaque pale (3), au moins un second organe électriquement conducteur (17), déformable et/ou mobile sur un second support (18) solidaire de l'un des éléments que sont le pied (3a) de la pale (3) correspondante et l'organe de liaison (5) correspondant, le second organe conducteur (17) étant, au moins lorsque la pale (3) est en configuration de vol, maintenu par des seconds moyens de rappel élastique (19) en contact permanent contre une seconde borne électriquement conductrice (15a) portée par l'autre desdits éléments, le second organe conducteur (17) et la seconde borne conductrice (15a) étant en continuité électrique l'un avec ledit conducteur (15) de la pale (3) et l'autre avec ledit premier organe conducteur (26, 37, 37').

11. Rotor selon la revendication 10, **caractérisé en ce que** le second organe conducteur est un poussoir (17) monté coulissant dans le second support, qui est un corps (18) électriquement conducteur et tubulaire, avec lequel le poussoir (17) reste en contact permanent, et dont le poussoir (17) fait saillie par une extrémité (17a) du poussoir appliquée contre la seconde borne conductrice (15a) sous l'action des seconds moyens élastiques de rappel (19), de préférence électriquement conducteurs, sollicitant son autre extrémité (17b), agencée en butée empêchant la sortie du poussoir (17) hors du corps (18), lesdits seconds moyens élastiques de rappel (19) étant disposés dans un logement (18a) du corps conducteur (18) et prenant appui contre un bouchon (20), de préférence électriquement conducteur, de fermeture dudit logement (18a).

12. Rotor selon l'une quelconque des revendications 10 et 11, **caractérisé en ce que** la seconde borne conductrice est une pièce rapportée sur l'élément (3) qui la porte.

13. Rotor selon l'une quelconque des revendications 10 et 11, **caractérisé en ce que** la seconde borne conductrice (15a) est constituée par une partie d'un conducteur électrique (15) de passage des charges électrostatiques et du courant de foudre, et qui apparait en surface dudit élément (3) qui la porte.

14. Rotor selon l'une quelconque des revendications 10 à 13, **caractérisé en ce que** la partie radiale externe de chaque organe de liaison (5) est agencée en chape externe (5b), dans laquelle le pied (3a) de la pale (3) correspondante est retenu par deux broches (6) sensiblement parallèles entre elles, et dont l'une est amovible pour permettre le repliage de la pale (3) par rapport à l'organe de liaison (5) par pivotement autour de l'autre broche (6), ladite seconde borne conductrice (15a) étant sur l'extrémité radiale interne du pied de pale (3a), et ledit second support (18) étant en saillie, en regard de ladite seconde borne (15a), dans ladite chape externe (5b) de l'organe de liaison (5), de sorte qu'en position repliée de la pale (3), ledit second organe conducteur (17) n'est plus en contact avec la seconde borne (15a).

15. Rotor selon la revendication 14, **caractérisé en ce que** l'équilibrage de chaque ensemble pale (3)-organe de liaison (5) est assuré par un bol à grenaille (21), le second support (18) étant fixé sur ou d'une seule pièce avec une partie radiale externe (21a) du bol à grenaille (21), lui-même électriquement conducteur et disposé sensiblement dans le fond de ladite chape radiale externe (5b) de l'organe de liaison (5), de sorte que le second organe conducteur (17) fasse saillie sensiblement radialement vers l'extérieur du second support (18), contre la seconde borne (15a) sur le pied (3a) de la pale (3) en configuration de vol.

16. Rotor selon la revendication 15, **caractérisé en ce que** le bol à grenaille (21) est retenu en entretoise entre les deux branches opposées de la chape radiale externe (5b) de l'organe de liaison (5) par au moins une broche (22) tubulaire de remplissage et vidange du bol (21).

17. Rotor selon l'une quelconque des revendications 10 à 13, **caractérisé en ce que**, pour chaque organe de liaison (5'), le pied (3'a) de la pale (3') correspondante est retenu dans une chape externe (55) d'une ferrure de repliage (54) montée sur l'organe de liaison (5') par une liaison pivotante (56-57) autour d'un axe de repliage (B-B) de la pale (3') avec la ferrure (54) par rapport à l'organe de liaison (5'), ladite seconde borne conductrice (15'a) étant sur l'extrémité radiale interne du pied de pale (3'a), et ledit second support (65) étant dans ladite chape externe (55) de la ferrure de repliage (54) et en regard de ladite seconde borne (15'a) de sorte que le second organe conducteur (63) est en saillie sensiblement radialement vers l'extérieur du second support (65) et en contact conducteur élastique permanent avec la seconde borne (15'a), pour assurer la continuité électrique entre la pale (3') et la ferrure (54), la continuité électrique entre la ferrure (54) et l'organe de liaison (5') étant assurée par contact conducteur avec au moins un axe de pivotement (57) conducteur.

18. Rotor selon la revendication 17, **caractérisé en ce que** le second organe conducteur est un pion de contact (63) à tête (64) munie d'une portée sphérique de contact avec la seconde borne (15'a) et repoussé par des moyens élastiques (67) prenant appui sur le second support agencé en bague épaulée (65) montée dans le fond de la chape (55) de la ferrure (54) et dans laquelle le pion (63) coulisse sur une course limitée.

19. Rotor selon l'une quelconque des revendications 10 à 18, **caractérisé en ce que**, pour chaque pale (3), l'organe de liaison (5) est au moins partiellement électriquement conducteur, de sorte à assurer une continuité électrique entre ledit premier organe conducteur (26, 37, 37') et celui dudit second organe conducteur (17) et de ladite seconde borne conductrice (15a) qui est monté sur l'organe de liaison (5).

20. Rotor selon l'une quelconque des revendications 10 à 19, **caractérisé en ce que** lesdits moyens de mise en continuité électrique comprennent, pour chaque pale (3), au moins un câble électriquement conducteur (53) s'étendant dans ou le long de l'organe de liaison (5) correspondant, entre ladite seconde borne conductrice (15a) de la pale (3) et ladite partie métallique (2b) de l'ensemble mât-moyeu (1-2).

## Patentansprüche

1. Drehflüglerrotor mit einer Einrichtung zur elektrischen Stromleitung für die Abführung elektrostatischer Ladungen und für den Blitzstromdurchgang am Rotor, welcher von einer Gattung ist, die umfaßt:
- eine Nabe (2), die mit einem Rotormast (1) um eine Drehachse (A-A) drehvereint ist und zwar so, daß die Gruppe Mast-Nabe (1-2) wenigstens ein metallisches Teil (2b) enthält, das mit dem Drehflügleraufbau in elektrischer Leitverbindung steht, und
- zumindest zwei Blätter (3), von denen jedes mit der Nabe (2) mittels eines Verbindungsorgans (5) verbunden ist, das in bezug auf die Drehachse (A-A) im wesentlichen radial ist und selbst mit der Nabe (2) durch Halte- und Gelenkmittel (4) verbunden ist,
wobei jedes Blatt (3) zum Durchgang der elektrostatischen Ladungen und des Blitzstromes wenigstens einen elektrischen Leiter (15) enthält, der mit dem metallischen Teil (2b) der Gruppe Mast-Nabe (1-2) durch Mittel zur elektrischen Stromleitung der Einrichtung verbunden ist,
**dadurch gekennzeichnet, daß** die Mittel zur elektrischen Stromleitung für jedes Blatt (3) wenigstens ein erstes elektrisch leitfähiges Organ (26, 37, 37') umfassen, das mit dem entsprechenden Verbindungsorgan (5) bei seinen Anstellungs-, Schlag- und Widerstandsausschlägen mit dem Blatt (3) in bezug auf die Nabe (2) vereint und derart ist, daß es mit dem elektrischen Leiter (15) des Blattes (3) in elektrischer Leitverbindung steht, und mit einem ersten elektrisch leitfähigen Anschluß (29, 29', 29"), der mit der Nabe (2) vereint ist und mit dem metallischen Teil (2b) der Gruppe Mast-Nabe (1-2) in elektrischer Leitverbindung steht, elastisch in Dauerkontakt gehalten ist.

2. Rotor nach Anspruch 1, **dadurch gekennzeichnet, daß** das erste leitfähige Organ (37, 37') an einem Schwingarm (35, 35') an einer ersten Stütze (23', 45) angebracht ist, die am Verbindungsorgan (5) befestigt ist, wobei der Arm (35, 35') durch erste elastische Rückstellmittel (39, 39') beansprucht wird, die das erste leitfähige Organ (37, 37') an den ersten Anschluß (29', 29") in elastischem Kontakt anlegen.

3. Rotor nach Anspruch 2, **dadurch gekennzeichnet, daß** das erste leitfähige Organ (37, 37') in leitendem Kontakt am Schwingarm (35, 35') angebracht ist, der elektrisch leitfähig ist und in leitendem Kontakt mit der ersten Stütze (23', 45) steht, die elektrisch leitfähig ist und mit dem Leiter (15) des Blattes (3) in elektrischer Leitverbindung steht, wobei die ersten elastischen Mittel (39, 39') auf der ersten Stütze Abstützung finden.

4. Rotor nach Anspruch 3, **dadurch gekennzeichnet, daß** die ersten elastischen Rückstellmittel (39) zwischen dem Arm (35) und der ersten Stütze (23', 38) um eine Achse (40) herum angebracht sind, die am Arm (35) befestigt und in bezug auf die erste Stütze (23', 38) axial verschiebbar ist, an der die Achse (40) mit einem Axialspiel durch einen Anschlag (44) gehalten ist, der die Schwingungsamplitude des Arms (35) begrenzt.

5. Rotor nach Anspruch 3, **dadurch gekennzeichnet, daß** die ersten elastischen Rückstellmittel wenigstens ein Federblatt (39') enthalten, das mit einem Endteil am Schwingarm (35') befestigt und mit einem anderen Endteil an der ersten Stütze (45) elastisch gelagert ist, die auch wenigstens einen Widerstandsanschlag des entsprechenden Blattes (3) abstützt und am Verbindungsorgan (5) angesetzt ist, wobei das Federblatt (39') auf Biegung arbeitet, um das erste leitfähige Organ (37') an den ersten Anschluß (29") anzulegen.

6. Rotor nach einem der Ansprüche 3 bis 5, **dadurch gekennzeichnet, daß** das erste leitfähige Organ eine Kugel (37, 37') aus Zementstahl ist, die in ein Ende des Schwingarmes (35, 35') eingesetzt ist, der mit seinem anderen Ende um eine Achse (36, 36') schwenkbar angebracht ist, die im wesentlichen senkrecht zur Radialrichtung des entsprechenden Verbindungsorgans (5) verläuft, und der erste Anschluß (29', 29") eine Kugelkalottenbahn (30', 30") enthält, die im wesentlichen radial nach außen absteht und im wesentlichen auf ein Gelenkzentrum (Cb) der entsprechenden Halte- und Gelenkmittel (4) zentriert ist, um eine elastische Abstützung der Kugel (37, 37') während der Anstellungs-, Schlag- und Widerstandswinkelausschläge des Verbindungsorgans (5) und des Blattes (3) in bezug auf die Nabe (2) und um das Gelenkzentrum (Cb) zu erhalten.

7. Rotor nach Anspruch 1, **dadurch gekennzeichnet, daß** das erste leitfähige Organ (26) für die Abführung elektrostatischer Ladungen elastisch verformbar und von veränderbarer Länge, so wie eine vorzugsweise vorgespannte Schraubenfeder, und einerseits mit einer ersten elektrisch leitfähigen Stütze (23), die am Verbindungsorgan (5) angebracht ist und in elektrisch leitender Verbindung mit dem Leiter (15) des Blattes (3) steht, und andererseits mit dem ersten Anschluß (29) verbunden ist, wobei die Mittel zur elektrischen Stromleitung darüber hinaus für jedes Blatt (3) und für den Durchgang des Blitzstromes eine Funkenstrecke in Form einer elektrisch leitfähigen Nadel (31) enthalten, die in der Nähe des ersten leitfähigen Organs (26) an der ersten leitfähigen Stütze (23) befestigt und derart ist, daß ihre Spitze (31b) zu einem Gelenkzentrum (Cb) der Halte- und Gelenkmittel (4) hin gerichtet ist, wobei sie mit etwas Luft von einer kugelkalottenförmigen Bahn (30) entfernt im wesentlichen radial nach außen hin abstehend angeordnet und im wesentlichen zum Gelenkzentrum (Cb) des ersten Anschlusses (29) zentriert ist.

8. Rotor nach einem der Ansprüche 1 bis 7, **dadurch gekennzeichnet, daß** der erste Anschluß (29, 29', 29") an der Nabe (2) durch elektrisch leitfähige Mittel (7) zur Befestigung der entsprechenden Halte- und Gelenkmittel (4) an einem leitfähigen metallischen Teil (2b) der Nabe (2) in elektrischer Leitverbindung mit dem Aufbau des Drehflüglers befestigt ist.

9. Rotor nach Anspruch 8 im Zusammenhang mit einem der Ansprüche 6 und 7, **dadurch gekennzeichnet, daß** der innere radiale Teil jedes Verbindungsorgans (5) als innerer Gabelkopf (5c) ausgeführt ist und die entsprechenden Halte- und Gelenkmittel einen kugelförmigen geschichteten Anschlag (4) mit einer inneren radialen Bewehrung (4c), die zwischen den Zweigen des inneren Gabelkopfes (5c) befestigt ist, und einer äußeren radialen Bewehrung (4b), die durch wenigstens eine elektrisch leitfähige verbolzte Achse (7) am metallischen Teil (2b) der Nabe (2) befestigt ist, enthalten, das im inneren Gabelkopf (5c) in Eingriff steht und in dem das Gelenkzentrum (Cb) des kugelförmigen geschichteten Anschlags (4) liegt, wobei der als Kugelkalottenbahn (30, 30', 30") ausgebildete Anschluß (29, 29', 29") an der Nabe (2) durch die verbolzte Achse (7) befestigt ist, so daß die Kugelkalottenbahn (30, 30', 30") im inneren Gabelkopf (5c) mit ihrer Konvexität im wesentlichen radial nach außen hin gewandt angeordnet ist, wobei das erste leitfähige Organ (26, 37, 37'), die erste leitfähige Stütze (23, 23', 45) und gegebenenfalls die ersten elastischen Rückstellmittel (39, 39') und der Schwingarm (35, 35') oder die Funkenstreckennadel (31) auch im inneren Gabelkopf (5c) angebracht sind.

10. Rotor nach einem der Ansprüche 1 bis 9, **dadurch ge kennzeichnet,** daß die Mittel zur elektrischen Stromleitung für jedes Blatt (3) auch wenigstens ein zweites elektrisch leitfähiges Organ (17) umfassen, das verformbar und/oder bewegbar an einer zweiten Stütze (18) ist, die mit einem der Elemente vereint ist, die der Fuß (3a) des entsprechenden Blattes (3) und das entsprechende Verbindungsorgan (5) sind, wobei das zweite leitfähige Organ (17), zumindest wenn sich das Blatt (3) in Flugstellung befindet, durch zweite elastische Rückstellmittel (19) in Dauerkontakt mit einem zweiten elektrisch leitfähigen Anschluß (15a) gehalten ist, der durch das andere dieser Elemente getragen wird, wobei das zweite leitfähige Organ (17) und der zweite leitfähige Anschluß (15a) in elektrischer Leitverbindung stehen und zwar das eine mit dem Leiter (15) des Blattes (3) und das andere mit dem ersten leitfähigen Organ (26, 37, 37').

11. Rotor nach Anspruch 10, **dadurch gekennzeichnet, daß** das zweite leitfähige Organ ein Stößel (17) ist, der in der zweiten Stütze verschieblich ist, die ein elektrisch leitfähiger und rohrförmiger Körper (18) ist, mit dem der Stößel (17) in Dauerkontakt verbleibt und dessen Stößel (17) mit einem Ende (17a) des am zweiten leitfähigen Anschluß (15a) angelegten Stößels bei Betätigung der zweiten, vorzugsweise elektrisch leitfähigen, elastischen Rückstellmittel (19) hervorsteht, wobei sein anderes Ende (17b), das als Anschlag ausgelegt ist, der den Austritt des Stößels (17) aus dem Körper (18) heraus verhindert, beansprucht wird, wobei die zweiten elastischen Rückstellmittel (19) in einer Aufnahme (18a) des leitfähigen Körpers (18) untergebracht sind und gegen einen vorzugsweise elektrisch leitfähigen Verschlußstopfen (20) der Aufnahme (18a) Abstützung finden.

12. Rotor nach einem der Ansprüche 10 und 11, **dadurch gekennzeichnet, daß** der zweite leitfähige Anschluß ein Stück ist, das an dem Element (3) angesetzt ist, das ihn trägt.

13. Rotor nach einem der Ansprüche 10 und 11, **dadurch gekennzeichnet, daß** der zweite leitfähige Anschluß (15a) durch ein elektrisch leitfähiges Teil (15) zum Durchgang elektrostatischer Ladungen und des Blitzstromes gebildet ist, das sich auf der Oberfläche des Elements (3) befindet, das es trägt.

14. Rotor nach einem der Ansprüche 10 bis 13, **dadurch gekennzeichnet, daß** der äußere radiale Teil jedes Verbindungsorgans (5) als äußerer Gabelkopf (5b) ausgelegt ist, in dem der Fuß (3a) des entsprechenden Blattes (3) durch zwei Stifte (6) gehalten ist, die zueinander parallel sind und von denen der eine zum Klappen des Blattes (3) in bezug auf das Verbindungsorgan (5) durch Schwenkung um den anderen Stift (6) lösbar ist, wobei der zweite leitfähige Anschluß (15a) am inneren radialen Ende des Blattfußes (3a) ist und die zweite Stütze (18) gegenüber zum zweiten Anschluß (15a) im äußeren Gabelkopf (5b) des Verbindungsorgans (5) hervorsteht, so daß im geklappten Zustand des Blattes (3) das zweite leitfähige Organ (17) nicht mehr mit dem zweiten Anschluß (15a) in Kontakt steht.

15. Rotor nach Anspruch 14, **dadurch gekennzeichnet, daß** das Gleichgewicht jeder Gruppe Blatt (3)-Verbindungsorgan (5) durch eine Granulatschale (21) sichergestellt ist, wobei die zweite Stütze (18) an oder von einem einzigen Stück mit einem äußeren radialen Teil (21a) der Granulatschale (21) befestigt ist, die ihrerseits elektrisch leitfähig und im wesentlichen im Boden des äußeren radialen Gabelkopfes (5b) des Verbindungsorgans (5) angeordnet ist, so daß bei Flugstellung das zweite leitfähige Organ (17) im wesentlichen radial nach außen von der zweiten Stütze (18) gegen den zweiten Anschluß (15a) am Fuß (3a) des Blattes (3) hervorspringt.

16. Rotor nach Anspruch 15, **dadurch gekennzeichnet, daß** die Granulatschale (21) als Zwischenstück zwischen den beiden Zweigen, die zum äußeren radialen Gabelkopf (5b) des Verbindungsorgans (5) entgegengesetzt liegen, durch wenigstens einen rohrförmigen Stift (22) zum Füllen und Entleeren der Schale (21) gehalten ist.

17. Rotor nach einem der Ansprüche 10 bis 13, **dadurch gekennzeichnet, daß** für jedes Verbindungsorgan (5') der Fuß (3'a) des entsprechenden Blattes (3') in einem äußeren Gabelkopf (55) eines Klappbeschlags (54) gehalten ist, der am Verbindungsorgan (5') durch eine Schwenkverbindung (56-57) um eine Klappachse (B-B) des Blattes (3') mit dem Beschlag (54) in bezug auf das Verbindungsorgan (5') angebracht ist, wobei der zweite leitfähige Anschluß (15'a) am inneren radialen Ende des Blattfußes (3'a) und die zweite Stütze (65) im äußeren Gabelkopf (55) des Klappbeschlages (54) und gegenüberliegend zum zweiten Anschluß (15'a) ist, so daß das zweite leitfähige Organ (63) im wesentlichen radial nach außen von der zweiten Stütze (65) und in elastischem leitenden Dauerkontakt mit dem zweiten Anschluß (15'a) hervorsteht, um die elektrische Leitverbindung zwischen dem Blatt (3') und dem Beschlag (54) sicherzustellen, wobei die elektrische Leitverbindung zwischen dem Beschlag (54) und dem Verbindungsorgan (5') durch Leitkontakt mit wenigstens einer leitfähigen Schwenkachse (57) sichergestellt wird.

18. Rotor nach Anspruch 17, **dadurch gekennzeichnet, daß** das zweite leitfähige Organ ein mit Kopf (64) mit einer kugelförmigen Fläche zum Kontakt mit dem zweiten Anschluß (15'a) versehener Kontaktblock (63) ist, der durch elastische Mittel (67) zurückgestoßen wird, die Abstützung an der zweiten Stütze finden, die als Schulterring (65) ausgelegt ist, der im Boden des Gabelkopfes (55) des Beschlages (54) angebracht ist und in dem sich der Block (63) auf einer begrenzten Strecke verschiebt.

19. Rotor nach einem der Ansprüche 10 bis 18, **dadurch gekennzeichnet, daß** für jedes Blatt (3) das Verbindungsorgan (5) wenigstens teilweise elektrisch leitfähig ist, so daß eine elektrische Leitverbindung zwischen dem ersten leitfähigen Organ (26, 37, 37') und dem zweiten leitfähigen Organ (17) oder dem zweiten leitfähigen Anschluß (15a) und zwar von diesen beiden dasjenige, das am Verbindungsorgan (5) angebracht ist, sichergestellt wird.

20. Rotor nach einem der Ansprüche 10 bis 19, **dadurch gekennzeichnet, daß** die Mittel zur elektrischen Stromleitung für jedes Blatt (3) wenigstens ein elektrisch leitfähiges Kabel (53) umfassen, das sich im oder entlang dem entsprechenden Verbindungsorgan (5) zwischen dem zweiten leitfähigen Anschluß (15a) des Blattes (3) und dem metallischen Teil (2b) der Gruppe Mast-Nabe (1-2) erstreckt.

## Claims

1. A rotorcraft rotor with an installation for affording electrical continuity for the removal of electrostatic charge and the passing of lightning current on the rotor, which is of the type comprising :
- a hub (2) integral in terms of rotation with a rotor mast (1) about an axis of rotation (A-A) and such that the mast-hub assembly (1-2) includes at least one metallic part (2b) in electrical continuity with the structure of the rotorcraft, and
- at least two blades (3), each of which is connected to the hub (2) via a linking member (5) which is substantially radial with respect to the axis of rotation (A-A), and itself connected to the hub (2) by retaining and articulating means (4),
each blade (3) comprising at least one electric conductor (15) for passing electrostatic charge and lightning current, connected to said metallic part (2b) of the mast-hub assembly (1-2) by means affording the installation electrical continuity,
**characterized in that** said means affording electrical continuity comprise, for each blade (3), at least one first electrically conductive member (26, 37, 37') integral with the corresponding linking member (5) in its deflections in terms of pitch, flapping and drag with said blade (3) relative to the hub (2) and so as to be in electrical continuity with said electric conductor (15) of the blade (3), and held elastically in permanent contact with a first electrically conductive terminal (29, 29', 29") integral with the hub (2) and in electrical continuity with said metallic part (2b) of the mast-hub assembly (1-2).

2. Rotor according to Claim 1, **characterized in that** said first conductive member (37, 37') is mounted on a swivelling arm (35, 35') on a first support (23', 45) fixed to said linking member (5), the arm (35, 35') being acted upon by first elastic return means (39, 39') applying the first conducting member (37, 37') into elastic contact against said first terminal (29', 29").

3. Rotor according to Claim 2, **characterized in that** said first conductive member (37, 37') is mounted in conductive contact on the swivelling arm (35, 35') which is electrically conductive, and in conductive contact with said first electrically conductive support (23', 45) and in electrical continuity with said conductor (15) of the blade (3), said first elastic means (39, 39') resting on said first support.

4. Rotor according to Claim 3, **characterized in that** said first elastic return means (39) are mounted between said arm (35) and said first support (23', 38) about a spindle (40) fixed to the arm (35) and capable of moving axially relative to the first support (23', 38) on which the spindle (40) is held, with axial play, by a stop (44) limiting the amplitude of swivelling of the arm (35).

5. Rotor according to Claim 3, **characterized in that** said first elastic return means comprise at least one spring leaf (39') fixed by an end part to the swivelling arm (35') and resting elastically by another end part against said first support (45), also supporting at least one drag stop for the corresponding blade (3) and attached to said linking member (5), said spring leaf (39') operating in bending in order to apply said first conductive member (37') against said first terminal (29").

6. Rotor according to any one of Claims 3 to 5, **characterized in that** said first conductive member is a ball (37, 37') made of cemented steel, crimped into an end of the swivelling arm (35, 35') mounted so that it can pivot, by its other end, about a spindle (36, 36') substantially perpendicular to the radial direction of the corresponding linking member (5), and said first terminal (29', 29") comprises a track (30', 30") in the form of a spherical cap projecting substantially radially outwards, and substantially centred on a centre of articulation (Cb) of said corresponding retaining and articulating means (4), in order to receive the elastic thrust of said ball (37, 37') during the angular deflections in terms of pitch, flapping and drag of the linking member (5) and of the blade (3) relative to the hub (2) and about said centre of articulation (Cb).

7. Rotor according to Claim 1, **characterized in that** said first conductive member (26) is elastically deformable and of variable length, suc as a coil spring, preferably prestressed), for the removal of electrostatic charge and linked, on the one hand, to a first elastically conductive support (23) mounted on said linking member (5) and in electrical continuity with said conductor (15) of the blade (3) and, on the other hand, to said first terminal (29), said means for affording electrical continuity additionally comprising, for each blade (3) and for passing lightning current, a spark arrester in the form of an electrically conductive needle (31) fixed close to said first conductive member (26) on said first conductive support (23) and such that its point (31b) is directed towards a centre of articulation (Cb) of said retaining and articulating means (4), while being spaced a small distance away from a track (30) in the form of a spherical cap projecting substantially radially outwards and substantially centred on said centre of articulation (Cb) of said second terminal (29).

8. Rotor according to any one of Claims 1 to 7, **characterized in that** said first terminal (29, 29', 29") is fixed to the hub (2) by electrically conductive means (7) for fixing said corresponding retaining and articulating means (4) to a conductive metallic part (2b) of the hub (2) in electrical continuity with the structure of the rotorcraft.

9. Rotor according to Claim 8, as attached to one of Claims 6 and 7,
**characterized in that** the internal radial part of each linking member (5) is arranged as an internal clevis block (5c), and the corresponding retaining and articulating means comprise a laminated spherical stop (4) with an internal radial armature (4c) fixed between the branches of the internal clevis block (5c) and an external radial armature (4b) fixed by at least one electrically conductive threaded spindle (7) on said metallic part (2b) of the hub (2) which is engaged in the internal clevis block (5c), and in which the centre of articulation (Cb), of said laminated spherical stop (4) lies, the terminal (29, 29', 29") with a track in the form of a spherical cap (30, 30', 30") being fixed to the hub (2) by said threaded spindle (7) so that the track (30, 30', 30") in the form of a spherical cap is arranged inside the internal clevis block (5c) with its convexity pointing substantially radially outwards, said first conductive member (26, 37, 37'), said first conductive support (23, 23', 45) and, if appropriate, said first elastic return means (39, 39') and said swivelling arm (35, 35') or said spark arrester needle (31) also being mounted in said internal clevis block (5c).

10. Rotor according to any one of Claims 1 to 9, **characterized in that** said means for affording electrical continuity also comprise, for each blade (3), at least one second electrically conductive member (17) which is deformable and/or can move on a second support (18) integral with one of the elements that are the root (3a) of the corresponding blade (3) and the corresponding linking member (5), the second conductive member (17), at least when the blade (3) is in the flight configuration, being held by second elastic return means (19) in permanent contact against a second electrically conductive terminal (15a) borne by the other of the said elements, the second conductive element (17) and the second conductive terminal (15a) being in electrical continuity, one with said conductor (15) of the blade (3), and the other with said first conductive member (26, 37, 37').

11. Rotor according to Claim 10, **characterized in that** the second conductive member is a push-rod (17) mounted so that it can slide in the second support, which is an electrically conductive and tubular body (18) with which the push-rod (17) remains in permanent contact, and from which the push-rod (17) projects by one end (17a) of the push-rod applied against the second conductive terminal (15a) under the action of the second elastic return means (19), preferably electrically conductive, acting upon its other end (17b) arranged as a stop preventing the push-rod (17) from coming out of the body (18), said second elastic return means (19) being arranged in a housing (18a) of the conductive body (18) and resting against a plug (20), preferably an electrically conductive one, for closing said housing (18a).

12. Rotor according to either one of Claims 10 and 11, **characterized in that** the second conductive terminal is a component attached to the element (3) bearing it.

13. Rotor according to either one of Claims 10 and 11, **characterized in that** the second conductive terminal (15a) consists of part of an electrical conductor (15) for passing electrostatic charge and lightning current, and which appears at the surface of said element (3) bearing it.

14. Rotor according to any one of Claims 10 to 13, **characterized in that** the external radial part of each linking member (5) is arranged as an external clevis block (5b), in which the root (3a) of the corresponding blade (3) is held by two substantially mutually parallel pins (6), one of which is removable to allow the blade (3) to be folded back relative to the linking member (5) by pivoting about the other pin (6), said second conductive terminal (15a) being on the internal radial end of the blade root (3a), and said second support (18) projecting, opposite said second terminal (15a), into said external clevis block (5b) of the linking member (5), so that when the blade (3) is in the folded-back position, said second conductive member (17) is no longer in contact with the second terminal (15a).

15. Rotor according to Claim 14, **characterized in** tht each blade (3)/linking member (5) assembly is balanced by a shot pot (21), the second support (18) being fixed to or integral with an external radial part (21a) of the shot pot (21), itself electrically conductive and arranged substantially in the bottom of said external radial clevis block (5b) of the linking member (5) so that the second conductive member (17) projects substantially radially outwards from the second support (18), against the second terminal (15a) on the root (3a) of the blade (3) in the flight configuration.

16. Rotor according to Claim 15, **characterized in that** the shot pot (21) is held as a spacer piece between the two opposed branches of the external radial clevis block (5b) of the linking member (5) by at least one tubular pin (22) for filling and emptying the pot (21).

17. Rotor according to any one of Claims 10 to 13, **characterized in that**, for each linking member (5'), the root (3'a) of the corresponding blade (3') is held in an external clevis block (55) of a hinging fitting (54) mounted on the linking member (5') by a link (56-57) pivoting about an axis (B-B) for folding back the blade (3') with the fitting (54) relative to the linking member (5'), said second conductive terminal (15'a) being on the internal radial end of the blade root (3'a) and said second support (65) being in said external clevis block (55) of the hinging fitting (54) and opposite said second terminal (15'a), so that the second conductive member (63) projects substantially radially outwards from the second support (65) and is in permanent elastic conductive contact with the second terminal (15'a) in order to afford electrical continuity between the blade (3') and the fitting (54), the electrical continuity between the fitting (54) and the linking member (5') being afforded by conductive contact with at least one conductive pivot pin (57).

18. Rotor according to Claim 17, **characterized in that** the second conductive member is a contact peg (63) with a head (64) equipped with a spherical bearing surface for contact with the second terminal (15'a) and is pushed back by elastic means (67) resting against the second support arranged as a stepped ring (65) mounted in the bottom of the clevis block (55) of the fitting (54) and in which the peg (63) slides with limited travel.

19. Rotor according to any one of Claims 10 to 18, **characterized in that** for each blade (3), the linking member (5) is at least partially electrically conductive so as to afford electrical continuity between said first conductive member (26, 37, 37') and that one of said second conductive member (17) and of said second conductive terminal (15a) which is mounted on the linking member (5).

20. Rotor according to any one of Claims 10 to 19, **characterized in that** said means for affording electrical continuity comprise, for each blade (3), at least one electrically conductive cable (53) running in or along the corresponding linking member (5) between said second conductive terminal (15a) of the blade (3) and said metallic part (2b) of the mast-hub assembly (1-2).
